(19) Europäisches Patentamt
European Patent Office
Office européen des brevets

(11) **EP 2 579 080 A1**

(12) **EUROPEAN PATENT APPLICATION**
published in accordance with Art. 153(4) EPC

(43) Date of publication:
**10.04.2013 Bulletin 2013/15**

(21) Application number: **11789908.8**

(22) Date of filing: **27.05.2011**

(51) Int Cl.:
**G02B 13/00** *(2006.01)*    **G02B 13/18** *(2006.01)*

(86) International application number:
**PCT/JP2011/062748**

(87) International publication number:
**WO 2011/152506 (08.12.2011 Gazette 2011/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.06.2010 JP 2010129323**

(71) Applicant: **Sony Corporation
Tokyo 180-0075 (JP)**

(72) Inventor: **TAMURA Masaki
Tokyo 108-0075 (JP)**

(74) Representative: **Horner, David Richard
D Young & Co LLP
120 Holborn
London EC1N 2DY (GB)**

(54) **IMAGE PICKUP LENS AND IMAGE PICKUP DEVICE**

(57)    The present invention ensures excellent optical characteristics corresponding with a high pixel imaging element while an imaging lens is miniaturized and has a larger aperture.

The imaging lens includes, in order from an object side: a first lens having positive refractive power; a second lens in a meniscus shape including a concave surface facing an image side and having negative refractive power; a third lens having positive refractive power; a fourth lens in a meniscus shape including a concave surface facing the object side and having positive refractive power in the vicinity of an optical axis; and a fifth lens having negative refractive power in the vicinity of the optical axis and having positive refractive power in a peripheral section.

FIG.1

EP 2 579 080 A1

**Description**

[Technical Field]

The present invention relates to an imaging lens and an imaging device, and is suitable for application to an imaging lens having a large aperture with an F-number of about 2.0, for example, and is suitable for application to an imaging device of small size such as a digital still camera, a portable telephone provided with a camera, or the like using a solid-state imaging element such as a CCD (Charge Coupled Device), a CMOS (Complementary Metal Oxide Semiconductor), or the like.

[Background Art]

Conventionally, portable telephones provided with a camera and digital still cameras including an imaging device using a solid-state imaging element such as a CCD, a CMOS, or the like are known. Such an imaging device is desired to be further miniaturized, and an imaging lens incorporated in the imaging device is also desired to have a small size and a short total length.
In addition, recently, small-sized imaging apparatuses such as portable telephones provided with a camera and the like have also been miniaturized and increased in the number of pixels of an imaging element, and models including a high pixel imaging element having eight million pixels or more, for example, have spread.
On the other hand, such an imaging device is desired to have a fast lens with a larger aperture in order to prevent a decrease in sensitivity of the imaging element and an increase in noise due to a reduction in cell pitch.
Imaging lenses of a four-piece configuration are now mainstream as such a small-size and high-performance imaging lens (see for example Patent Document 1 and Patent Document 2).

[Citation List]

[Patent Literature]

[PTL 1]
Japanese Patent Laid-Open No. 2009-265245
[PTL 2]
Japanese Patent Laid-Open No. 2010-49113

[Summary]

Imaging lenses according to Patent Document 1 and Patent Document 2 are imaging lenses of a four-piece configuration corresponding with a current high pixel imaging element, and have a small size and ensure high optical performance by correcting various aberrations in a well-balanced manner while a total optical length is reduced.
However, Patent Document 1 and Patent Document 2 optimize the optical performance and the total optical length using an imaging lens with an F-number of about 2.8. When the aperture is enlarged from the F-number of about 2.8 to an F-number of about 2.0 with such a configuration unchanged, spherical aberration of axial aberrations, comatic aberration of off-axis aberrations, and field curvature are corrected insufficiently, and it is thus difficult to ensure necessary optical performance.
In addition, axial chromatic aberration needs to be suppressed more for further improvement in optical performance. However, with the configurations described in Patent Document 1 and Patent Document 2, it is difficult to correct axial chromatic aberration while reducing the total optical length, and it is difficult to ensure high resolution performance necessary as the aperture is enlarged.
The present invention has been made in view of the above points, and is to propose a small-size and large-aperture imaging lens having excellent optical characteristics corresponding with a high pixel imaging element and an imaging device using the imaging lens.
In order to solve such problems, according to the present invention, there is provided an imaging lens including, in order from an object side: a first lens having positive refractive power; a second lens in a meniscus shape including a concave surface facing an image side and having negative refractive power; a third lens having positive refractive power; a fourth lens in a meniscus shape including a concave surface facing the object side and having positive refractive power in the vicinity of an optical axis; and a fifth lens having negative refractive power in the vicinity of the optical axis and having positive refractive power in a peripheral section.

The imaging lens thus has a five-piece configuration and a power arrangement as described above. It is thereby possible to correct spherical aberration of axial aberrations, comatic aberration of off-axis aberrations, and field curvature, which become a problem when an aperture is enlarged, in a well-balanced manner, while reducing a total optical length.

Thereby, in the present invention, a small-size and large-aperture imaging lens having excellent optical performance with spherical aberration of axial aberrations, comatic aberration of off-axis aberrations, and field curvature corrected in a well-balanced manner can be formed for a high pixel imaging element.

In addition, in the present invention, a small-size and large-aperture imaging lens having high resolution performance with axial chromatic aberration corrected in a well-balanced manner while the total optical length is reduced can be formed for a high pixel imaging element.

In addition, all of the first to fifth lenses of the imaging lens according to the present invention are formed by lenses made of resin, and formed so as to satisfy a conditional expression (1), a conditional expression (2), a conditional expression (3), and a conditional expression (4) in the following:

$$(1) \quad \nu_1 > 50$$

$$(2) \quad \nu_2 < 30$$

$$(3) \quad \nu_3 > 50$$

$$(4) \quad \nu_4 > 50$$

where

$\nu_1$ is the Abbe number of the first lens at a d-line (wavelength of 587.6 nm),
$\nu_2$ is the Abbe number of the second lens at the d-line (wavelength of 587.6 nm),
$\nu_3$ is the Abbe number of the third lens at the d-line (wavelength of 587.6 nm), and
$\nu_4$ is the Abbe number of the fourth lens at the d-line (wavelength of 587.6 nm).

The conditional expression (1) defines the Abbe number of the first lens at the d-line. The conditional expression (2) defines the Abbe number of the second lens at the d-line. The conditional expression (3) defines the Abbe number of the third lens at the d-line. The conditional expression (4) defines the Abbe number of the fourth lens at the d-line. The conditional expressions represent conditions for excellently correcting chromatic aberration occurring in the lens system.

When the imaging lens deviates from the specified values of the conditional expression (1), the conditional expression (2), the conditional expression (3), and the conditional expression (4), the correction of axial chromatic aberration, which is necessary in enlarging the aperture with an F-number of about 2.0, becomes difficult.

Thus, in the imaging lens according to the present invention, by satisfying the conditional expression (1), the conditional expression (2), the conditional expression (3), and the conditional expression (4), it is possible to reduce the total optical length while effectively correcting axial chromatic aberration and ensuring excellent optical performance.

Further, because all the lenses in the imaging lens according to the present invention are formed by lenses made of resin as a same material, amounts of change in refractive power in all the lenses at a time of a variation in temperature can be made to be uniform, and thus variation in field curvature, which becomes a problem at a time of a variation in temperature, can be suppressed.

In addition, because all of the lenses in the imaging lens according to the present invention are formed by inexpensive and lightweight lenses made of resin, the imaging lens as a whole can be reduced in weight while mass productivity is ensured.

Further, the imaging lens according to the present invention is formed so as to satisfy a conditional expression (5) in the following:

$$(5) \quad 0 < f_3/f_4 < 3.0$$

where

$f_3$ is the focal length of the third lens, and
$f_4$ is the focal length of the fourth lens.

The conditional expression (5) defines a ratio between the focal length $f_3$ of the third lens and the focal length $f_4$ of the fourth lens, and limits a balance between the refractive power of the third lens and the refractive power of the fourth lens.

When the imaging lens deviates from the upper limit value of the conditional expression (5), the power (refractive power) of the third lens becomes too weak, and the correction of axial chromatic aberration becomes difficult, so that excellent optical performance cannot be maintained. When the imaging lens deviates from the lower limit value, on the other hand, the power of the third lens becomes strong, which is advantageous in terms of aberration correction, but the power of the fourth lens becomes too weak, and the total optical length is increased, so that the miniaturization of the present lens system becomes difficult.

Thus, in the imaging lens, by satisfying the conditional expression (5), it is possible to reduce the total optical length while effectively correcting axial chromatic aberration and ensuring excellent optical performance.

Further, the imaging lens according to the present invention is formed so as to satisfy a conditional expression (6) in the following:

$$(6) \quad 0.5 < |f_1/f_2| < 1.3$$

where

$f_1$ is the focal length of the first lens, and
$f_2$ is the focal length of the second lens.

The conditional expression (6) defines a ratio between the focal length $f_1$ of the first lens and the focal length $f_2$ of the second lens, and limits a balance between the refractive power of the first lens and the refractive power of the second lens.

When the imaging lens deviates from the upper limit value of the conditional expression (6), the power of the second lens becomes strong, which is advantageous in terms of aberration correction, but the power of the second lens becomes too strong, and the total optical length is increased, so that the miniaturization of the present lens system becomes difficult. When the imaging lens deviates from the lower limit value, on the other hand, the power of the second lens becomes too weak, and the correction of axial chromatic aberration becomes difficult, so that excellent optical performance cannot be maintained.

Thus, in the imaging lens, by satisfying the conditional expression (6), it is possible to reduce the total optical length while effectively correcting axial chromatic aberration and ensuring excellent optical performance.

Further, the imaging lens according to the present invention is formed to satisfy a conditional expression (8) and a conditional expression (9) in the following:

$$(8) \quad 0.5 < |f_5/f| < 3.0$$

$$(9) \quad \nu 5 > 50$$

where

f is the focal length of the entire lens system,
$f_5$ is the focal length of the fifth lens, and
$\nu_5$ is the Abbe number of the fifth lens at the d-line (wavelength of 587.6 nm).

The conditional expression (8) defines a ratio between the focal length $f_5$ of the fifth lens and the focal length f of the entire lens system, and limits the power of the fifth lens.

When the imaging lens deviates from the upper limit value of the conditional expression (8), the power of the fifth lens becomes weak, which is advantageous in terms of aberration correction, but the total optical length is increased, so that the miniaturization of the present lens system becomes difficult. When the imaging lens deviates from the lower limit value, on the other hand, the power of the fifth lens becomes too strong, and it becomes difficult to correct field curvature occurring from a center to an intermediate image height (for example a height increased by 20 to 50 percent) in a well-balanced manner.

The conditional expression (9) defines the Abbe number of the fifth lens at the d-line. When the Abbe number falls below the specified value, it becomes difficult to correct axial chromatic aberration and chromatic aberration of magnification in a well-balanced manner, and excellent optical performance cannot be maintained.

Thus, in the imaging lens, by satisfying the conditional expression (8) and the conditional expression (9), it is possible to reduce the total optical length while correcting axial chromatic aberration and chromatic aberration of magnification in a well-balanced manner and ensuring excellent optical performance corresponding with a high pixel imaging element.

Further, an aperture stop for adjusting an amount of light in the imaging lens according to the present invention is disposed nearer to the object side than the object side surface of the second lens.

Thus, in the imaging lens, an angle of incidence of a chief ray of the imaging lens with respect to the optical axis can be decreased by disposing the aperture stop nearer to the object side than the object side surface of the second lens, and bringing the position of an exit pupil as close to the object side as possible. It is thus possible to improve light receiving efficiency, and avoid degradation in image quality due to color mixture.

In addition, the aperture stop of the imaging lens is disposed at a position as close to the front of the optical system as possible. Thereby, as compared with a case in which the aperture stop is disposed nearer to the image side than the object side surface of the second lens, the position of the exit pupil is nearer to the front, and the total length of the lens system can be reduced.

Further, according to the present invention, there is provided an imaging device including: an imaging lens; and an imaging element for converting an optical image formed by the imaging lens into an electric signal; wherein the imaging lens includes, in order from an object side, a first lens having positive refractive power, a second lens in a meniscus shape including a concave surface facing an image side and having negative refractive power, a third lens having positive refractive power, a fourth lens in a meniscus shape including a concave surface facing the object side and having positive refractive power in the vicinity of an optical axis, and a fifth lens having negative refractive power in the vicinity of the optical axis and having positive refractive power in a peripheral section.

The imaging lens in the imaging device thus has a five-piece configuration and a power arrangement as described above. It is thereby possible to correct spherical aberration of axial aberrations, comatic aberration of off-axis aberrations, and field curvature, which become a problem when an aperture is enlarged, in a well-balanced manner, while reducing a total optical length.

Thereby, in the present invention, the imaging device including a small-size and large-aperture imaging lens having excellent optical performance with spherical aberration of axial aberrations, comatic aberration of off-axis aberrations, and field curvature corrected in a well-balanced manner can be formed for a high pixel imaging element.

In addition, in the present invention, the imaging device including a small-size and large-aperture imaging lens having high resolution performance with axial chromatic aberration corrected in a well-balanced manner while the total optical length is reduced can be formed for a high pixel imaging element.

An imaging lens according to the present invention includes, in order from an object side: a first lens having positive refractive power; a second lens in a meniscus shape including a concave surface facing an image side and having negative refractive power; a third lens having positive refractive power; a fourth lens in a meniscus shape including a concave surface facing the object side and having positive refractive power in the vicinity of an optical axis; and a fifth lens having negative refractive power in the vicinity of the optical axis and having positive refractive power in a peripheral section.

The imaging lens thus has a five-piece configuration and a power arrangement as described above. It is thereby possible to correct spherical aberration of axial aberrations, comatic aberration of off-axis aberrations, and field curvature, which become a problem when an aperture is enlarged, in a well-balanced manner, while reducing a total optical length.

Thereby, in the present invention, a small-size and large-aperture imaging lens having excellent optical performance with spherical aberration of axial aberrations, comatic aberration of off-axis aberrations, and field curvature corrected in a well-balanced manner can be formed for a high pixel imaging element.

In addition, in the present invention, a small-size and large-aperture imaging lens having high resolution performance with axial chromatic aberration corrected in a well-balanced manner while the total optical length is reduced can be formed for a high pixel imaging element.

An imaging device according to the present invention includes: an imaging lens; and an imaging element for converting an optical image formed by the imaging lens into an electric signal; wherein the imaging lens includes, in order from an object side, a first lens having positive refractive power, a second lens in a meniscus shape including a concave surface facing an image side and having negative refractive power, a third lens having positive refractive power, a fourth lens in a meniscus shape including a concave surface facing the object side and having positive refractive power in the vicinity of an optical axis, and a fifth lens having negative refractive power in the vicinity of the optical axis and having positive refractive power in a peripheral section.

The imaging lens in the imaging device thus has a five-piece configuration and a power arrangement as described above. It is thereby possible to correct spherical aberration of axial aberrations, comatic aberration of off-axis aberrations, and field curvature, which become a problem when an aperture is enlarged, in a well-balanced manner, while reducing a total optical length.

Thereby, in the present invention, the imaging device including a small-size and large-aperture imaging lens having excellent optical performance with spherical aberration of axial aberrations, comatic aberration of off-axis aberrations, and field curvature corrected in a well-balanced manner can be formed for a high pixel imaging element.

In addition, in the present invention, the imaging device including a small-size and large-aperture imaging lens having high resolution performance with axial chromatic aberration corrected in a well-balanced manner while the total optical length is reduced can be formed for a high pixel imaging element.

[Brief Description of Drawings]

[Fig. 1]

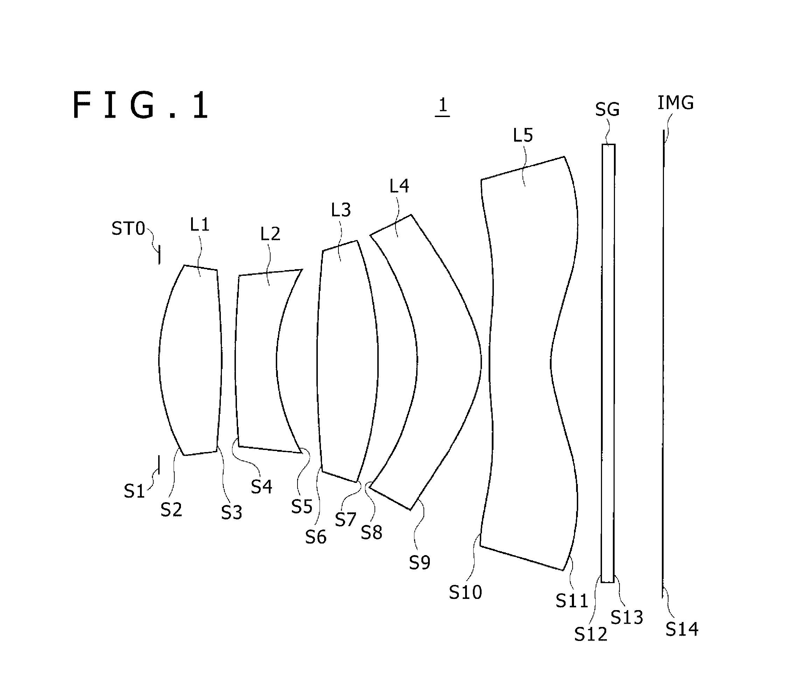

FIG. 1 is a schematic sectional view of a configuration of an imaging lens in a first numerical example.

[Fig. 2]

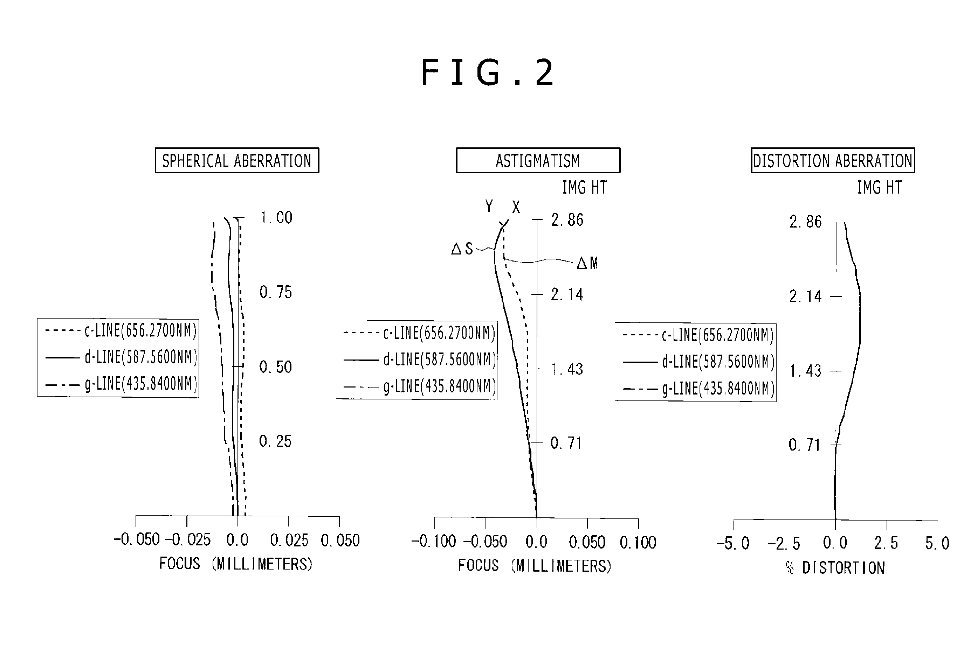

FIG. 2 is a characteristic curve diagram showing aberrations in the first numerical example.

[Fig. 3]

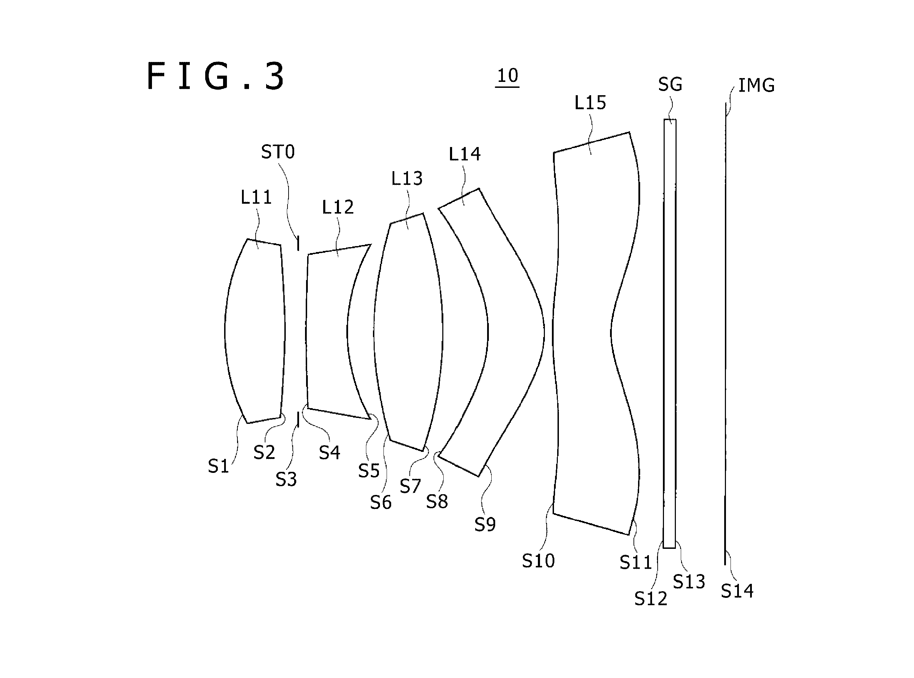

FIG. 3 is a schematic sectional view of a configuration of an imaging lens in a second numerical example.

[Fig. 4]

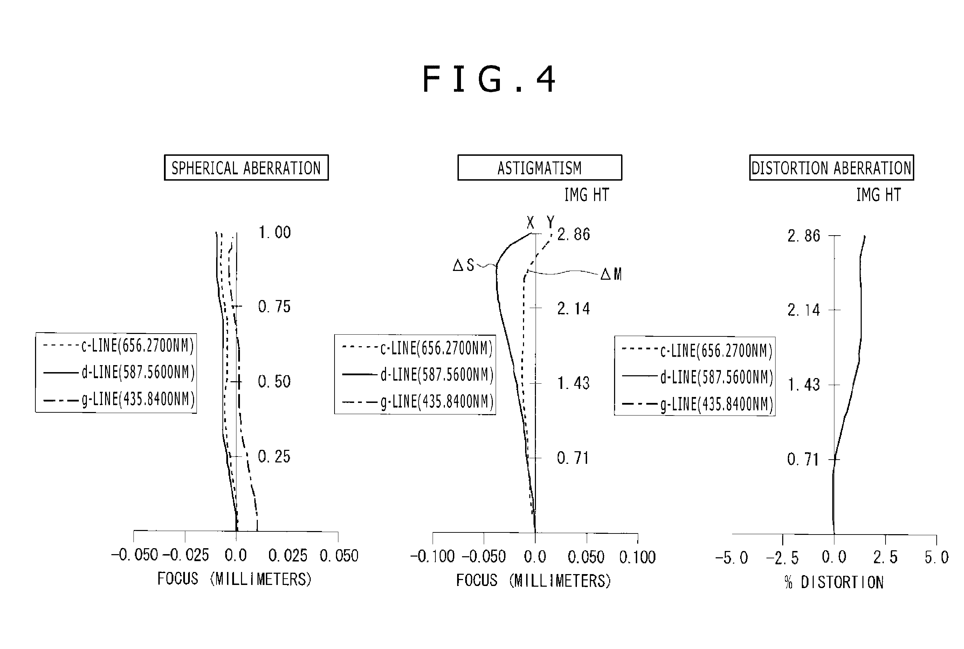

FIG. 4 is a characteristic curve diagram showing aberrations in the second numerical example.

[Fig. 5]

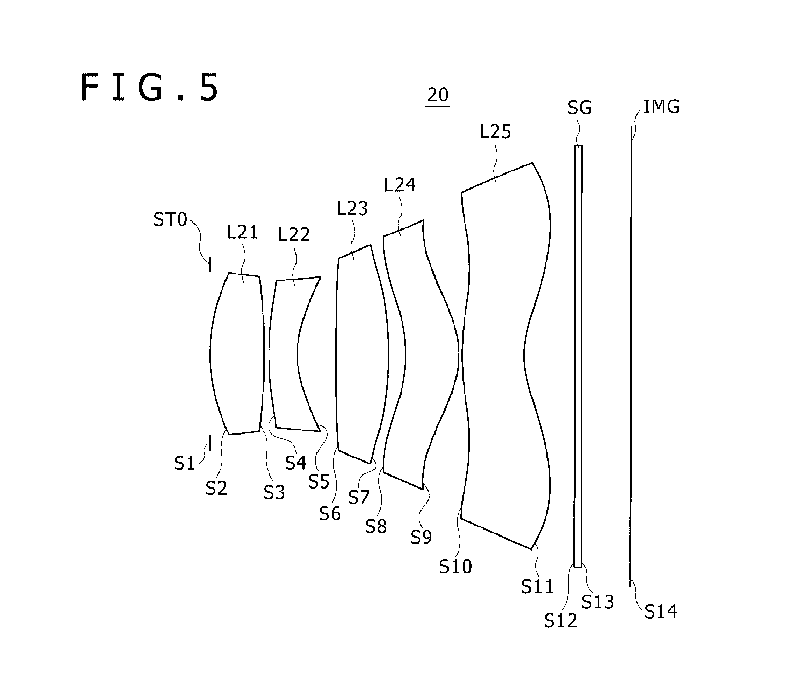

FIG. 5 is a schematic sectional view of a configuration of an imaging lens in a third numerical example.

[Fig. 6]

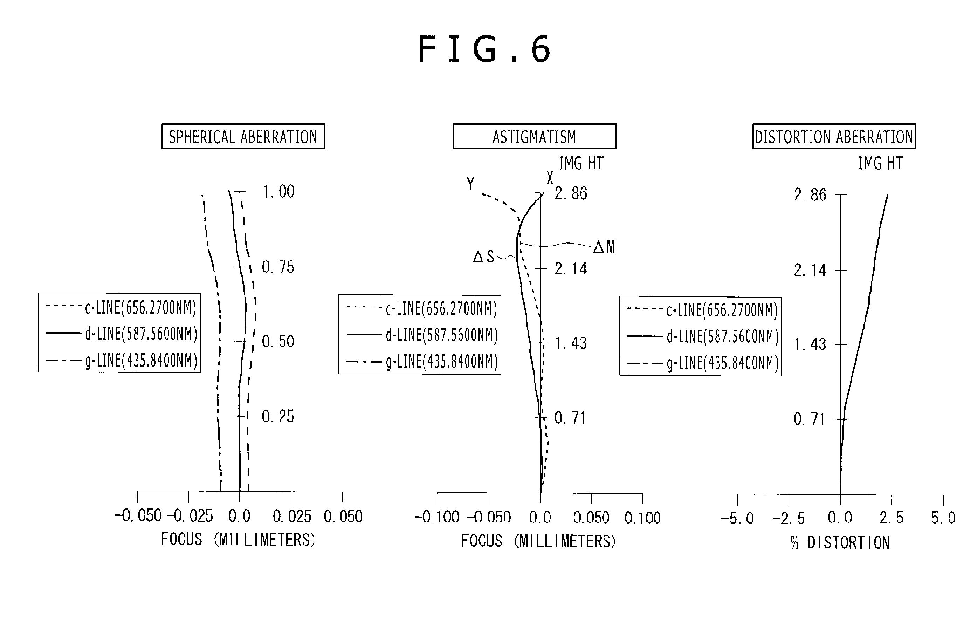

FIG. 6 is a characteristic curve diagram showing aberrations in the third numerical example.

[Fig. 7]

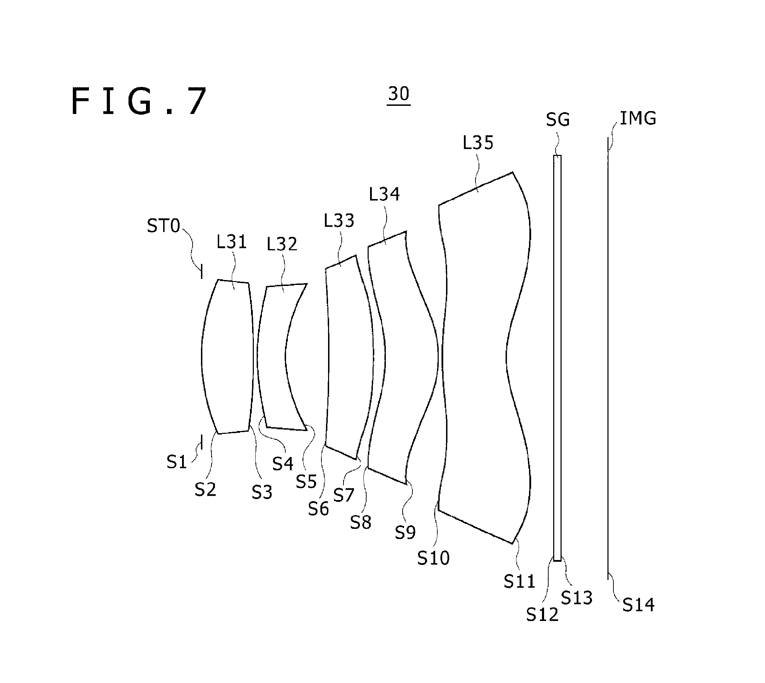

FIG. 7 is a schematic sectional view of a configuration of an imaging lens in a fourth numerical example.

[Fig. 8]

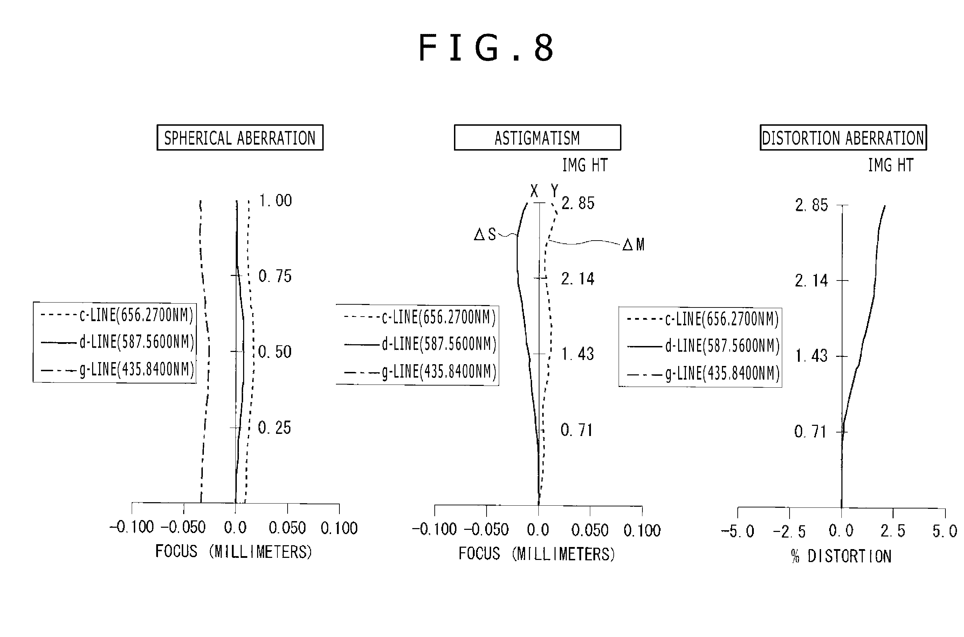

FIG. 8 is a characteristic curve diagram showing aberrations in the fourth numerical example.

[Fig. 9]

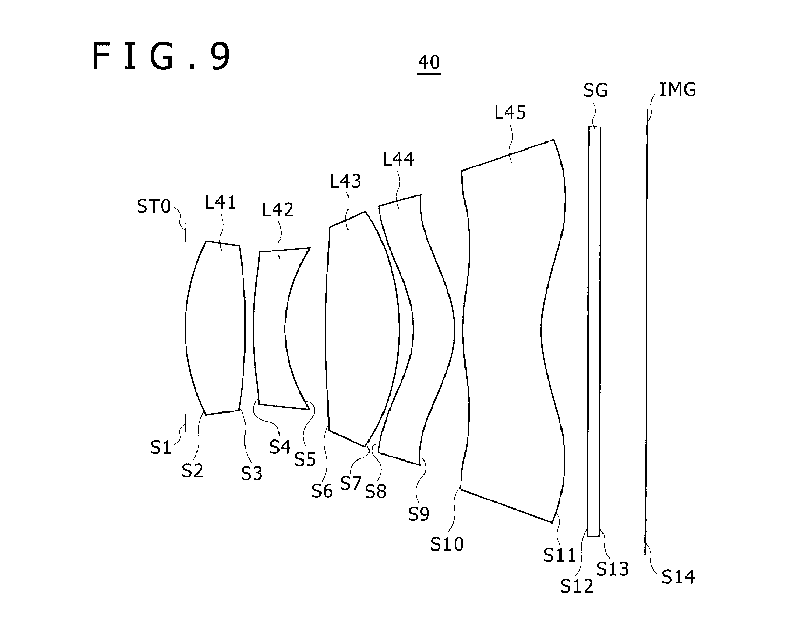

FIG. 9 is a schematic sectional view of a configuration of an imaging lens in a fifth numerical example.

[Fig. 10]

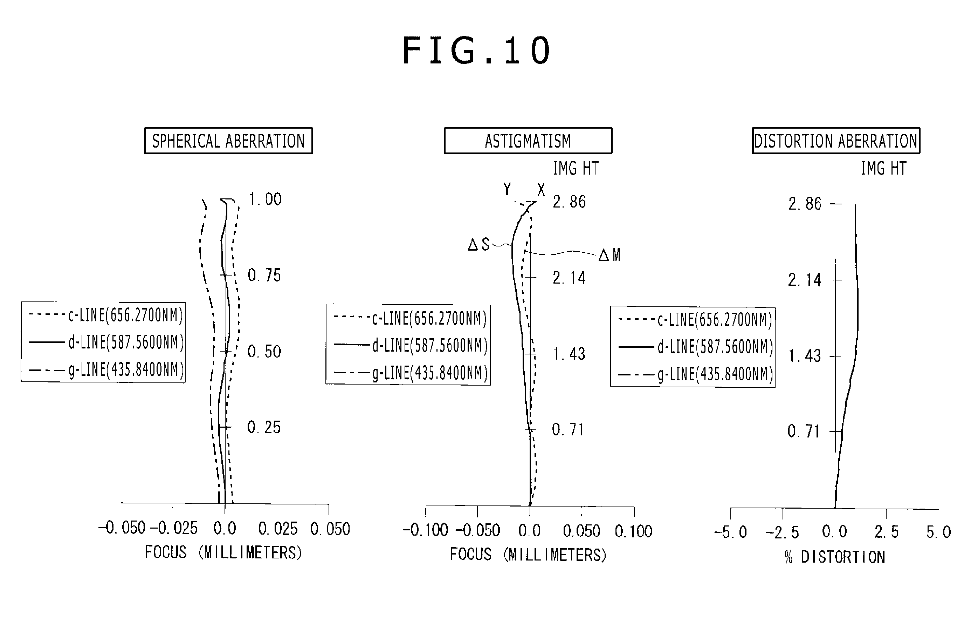

FIG. 10 is a characteristic curve diagram showing aberrations in the fifth numerical example.

[Fig. 11]

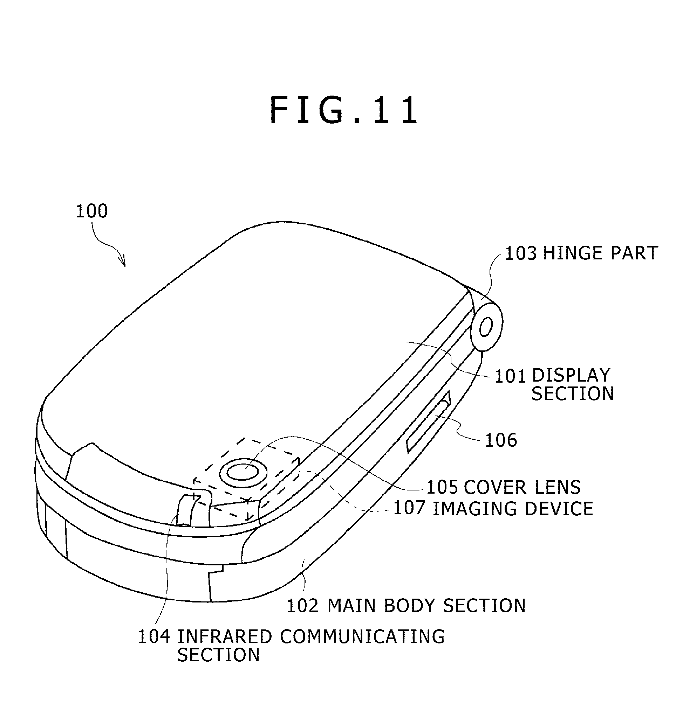

FIG. 11 is a schematic perspective view of an external constitution of a portable telephone including an imaging device.

[Fig. 12]

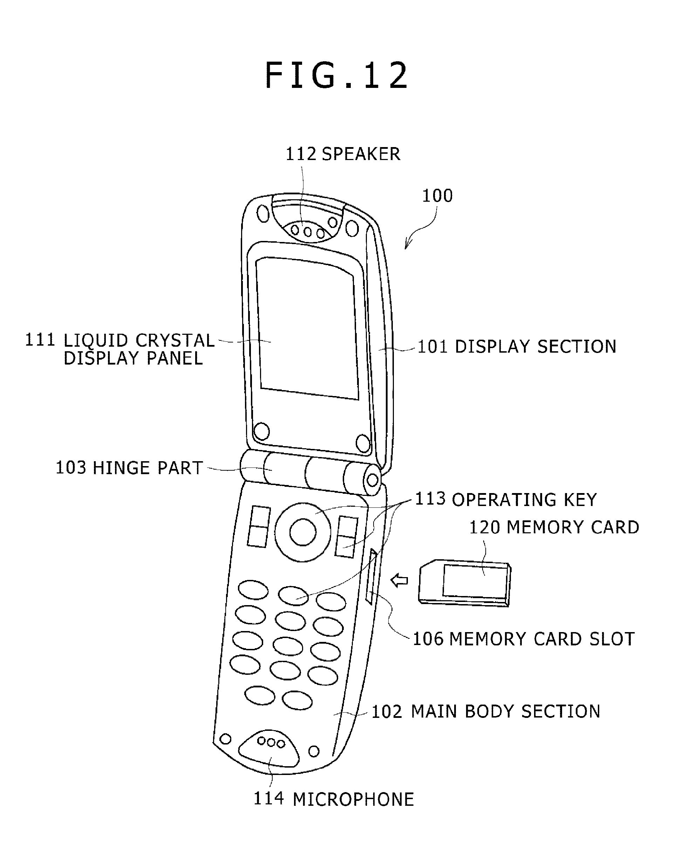

FIG. 12 is a schematic perspective view of the external constitution of the portable telephone including the imaging device.

[Fig. 13]

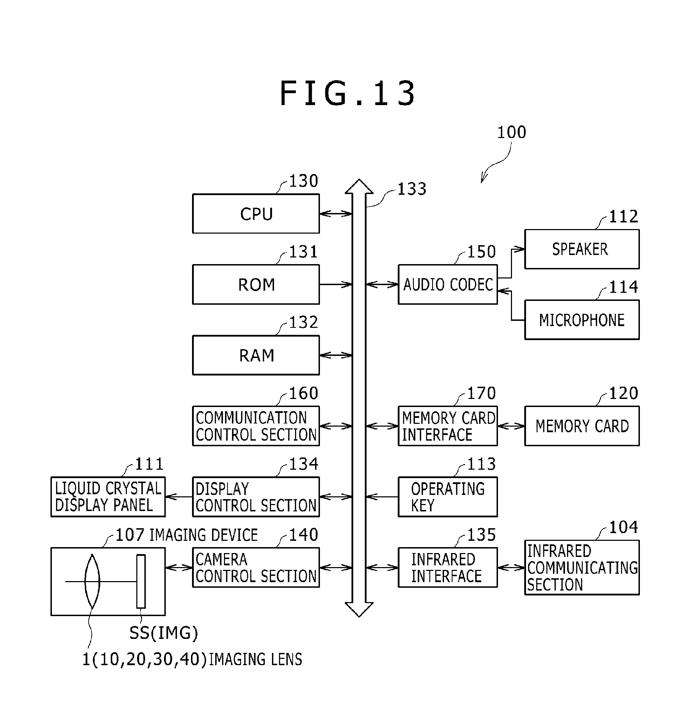

FIG. 13 is a schematic block diagram showing a circuit configuration of the portable telephone.

[Description of Embodiments]

A mode for carrying out the invention (which mode will hereinafter be referred to as embodiments) will hereinafter be described. Incidentally, description will be made in the following order.

1. Embodiment

2. Numerical Examples Corresponding to Embodiment (First to Fifth Numerical Examples)

3. Imaging Device and Portable Telephone

4. Other Embodiments

<1. Embodiment>

(1. Configuration of Imaging Lens)

An imaging lens according to the present invention is formed by, in order from an object side, a first lens having positive refractive power, a second lens in a meniscus shape including a concave surface facing an image side and having negative refractive power, a third lens having positive refractive power, a fourth lens in a meniscus shape including a concave surface facing the object side and having positive refractive power in the vicinity of an optical axis, and a fifth lens having negative refractive power in the vicinity of the optical axis and having positive refractive power in a peripheral section. Incidentally, the imaging lens has performance corresponding to a range of 24 to 40 (mm) as focal length of the entire lens system when calculated in terms of a 35-mm film.

The imaging lens thus has a five-piece configuration and a power arrangement as described above. It is thereby possible to correct spherical aberration of axial aberrations, comatic aberration of off-axis aberrations, and field curvature, which become a problem when an aperture is enlarged, in a well-balanced manner, while reducing a total optical length.

In addition, all of the first to fifth lenses of the imaging lens are formed by lenses made of resin, and formed so as to satisfy a conditional expression (1), a conditional expression (2), a conditional expression (3), and a conditional expression (4) in the following:

$$(1) \quad \nu_1 > 50$$

$$(2) \quad \nu_2 < 30$$

$$(3) \quad \nu_3 > 50$$

$$(4) \quad \nu_4 > 50$$

where

$\nu_1$ is the Abbe number of the first lens at a d-line (wavelength of 587.6 nm),
$\nu_2$ is the Abbe number of the second lens at the d-line (wavelength of 587.6 nm),
$\nu_3$ is the Abbe number of the third lens at the d-line (wavelength of 587.6 nm), and
$\nu_4$ is the Abbe number of the fourth lens at the d-line (wavelength of 587.6 nm).

The conditional expression (1) defines the Abbe number of the first lens at the d-line. The conditional expression (2) defines the Abbe number of the second lens at the d-line. The conditional expression (3) defines the Abbe number of the third lens at the d-line. The conditional expression (4) defines the Abbe number of the fourth lens at the d-line. The conditional expressions represent conditions for excellently correcting chromatic aberration occurring in the lens system.

When the imaging lens deviates from the specified values of the conditional expression (1), the conditional expression (2), the conditional expression (3), and the conditional expression (4), the correction of axial chromatic aberration, which is necessary in enlarging the aperture with an F-number of about 2.0, becomes difficult.

The imaging lens can thus correct axial chromatic aberration excellently by satisfying the conditional expression (1), the conditional expression (2), the conditional expression (3), and the conditional expression (4).

Thereby, the imaging lens has excellent optical performance corresponding with a high pixel imaging element, and the imaging lens can be miniaturized and have a large aperture.

Further, because all the lenses in the imaging lens are formed by lenses made of resin as a same material, amounts of change in refractive power in all the lenses at a time of a variation in temperature can be made to be uniform, and thus variation in field curvature, which becomes a problem at a time of a variation in temperature, can be suppressed.

In addition, because all of the lenses in the imaging lens are formed by inexpensive and lightweight lenses made of resin, the imaging lens as a whole can be reduced in weight while mass productivity is ensured.

Further, the imaging lens is formed so as to satisfy a conditional expression (5) in the following:

$$(5) \quad 0 < f_3/f_4 < 3.0$$

where

$f_3$ is the focal length of the third lens, and
$f_4$ is the focal length of the fourth lens.

The conditional expression (5) defines a ratio between the focal length $f_3$ of the third lens and the focal length $f_4$ of the fourth lens, and limits a balance between the refractive power of the third lens and the refractive power of the fourth lens.

When the imaging lens deviates from the upper limit value of the conditional expression (5), the power (refractive power) of the third lens becomes too weak, and the correction of axial chromatic aberration becomes difficult, so that excellent optical performance cannot be maintained. When the imaging lens deviates from the lower limit value, on the other hand, the power of the third lens becomes strong, which is advantageous in terms of aberration correction, but the power of the fourth lens becomes too weak, and the total optical length is increased, so that the miniaturization of the present lens system becomes difficult.

Thus, in the imaging lens, by satisfying the conditional expression (5), it is possible to reduce the total optical length while effectively correcting axial chromatic aberration and ensuring excellent optical performance.

Further, the imaging lens is formed so as to satisfy a conditional expression (6) in the following:

$$(6) \quad 0.5 < |f_1/f_2| < 1.3$$

where

$f_1$ is the focal length of the first lens, and
$f_2$ is the focal length of the second lens.

The conditional expression (6) defines a ratio between the focal length $f_1$ of the first lens and the focal length $f_2$ of the second lens, and limits a balance between the refractive power of the first lens and the refractive power of the second lens.

When the imaging lens deviates from the upper limit value of the conditional expression (6), the power of the second lens becomes strong, which is advantageous in terms of aberration correction, but the power of the second lens becomes too strong, and the total optical length is increased, so that the miniaturization of the present lens system becomes difficult. When the imaging lens deviates from the lower limit value, on the other hand, the power of the second lens becomes too weak, and the correction of axial chromatic aberration becomes difficult, so that excellent optical performance cannot be maintained.

Thus, in the imaging lens, by satisfying the conditional expression (6), it is possible to reduce the total optical length while effectively correcting axial chromatic aberration and ensuring excellent optical performance.

Further, the conditional expression (6) is desirably set so as to satisfy a range shown in a conditional expression (7).

$$(7) \quad 0.6 < |f_1/f_2| < 1.0$$

Thus, in the imaging lens, by satisfying the conditional expression (7), the reduction of the total optical length and the correction of axial chromatic aberration can be achieved in a better balanced manner than in a case where the conditional expression (6) is satisfied.

Further, the imaging lens is formed to satisfy a conditional expression (8) and a conditional expression (9) in the following:

$$(8) \quad 0.5 < |f_5/f| < 3.0$$

$$(9) \quad \nu_5 > 50$$

where

f is the focal length of the entire lens system,
$f_5$ is the focal length of the fifth lens, and
$\nu_5$ is the Abbe number of the fifth lens at the d-line (wavelength of 587.6 nm).

The conditional expression (8) defines a ratio between the focal length $f_5$ of the fifth lens and the focal length f of the entire lens system, and limits the power of the fifth lens.

When the imaging lens deviates from the upper limit value of the conditional expression (8), the power of the fifth lens becomes weak, which is advantageous in terms of aberration correction, but the total optical length is increased, so that the miniaturization of the present lens system becomes difficult. When the imaging lens deviates from the lower limit value, on the other hand, the power of the fifth lens becomes too strong, and it becomes difficult to correct field curvature occurring from a center to an intermediate image height (for example a height increased by 20 to 50 percent) in a well-balanced manner.

The conditional expression (9) defines the Abbe number of the fifth lens at the d-line. When the Abbe number falls below the specified value, it becomes difficult to correct axial chromatic aberration and chromatic aberration of magnification in a well-balanced manner, and excellent optical performance cannot be maintained.

Thus, in the imaging lens, by satisfying the conditional expression (8) and the conditional expression (9), it is possible to reduce the total optical length while correcting axial chromatic aberration and chromatic aberration of magnification in a well-balanced manner and ensuring excellent optical performance corresponding with a high pixel imaging element.

In addition, an aperture stop for adjusting an amount of light in the imaging lens according to the present invention is disposed nearer to the object side than the object side surface of the second lens.

Thus, in the imaging lens, an angle of incidence of a chief ray of the imaging lens with respect to the optical axis can be decreased by disposing the aperture stop nearer to the object side than the object side surface of the second lens, and bringing the position of an exit pupil as close to the object side as possible. It is thus possible to improve light receiving efficiency, and avoid degradation in image quality due to color mixture.

In addition, the aperture stop of the imaging lens is disposed at a position as close to the front of the optical system as possible. Thereby, as compared with a case in which the aperture stop is disposed nearer to the image side than the object side surface of the second lens, the position of the exit pupil is nearer to the front, and the total length of the lens system can be reduced.

Thus, the imaging lens according to the present invention has excellent optical performance, with spherical aberration of axial aberrations, comatic aberration of off-axis aberrations, and field curvature corrected in a well-balanced manner, for a high pixel imaging element having eight million pixels or more, for example, even when the aperture is enlarged to an F-number of about 2.0.

In addition, in the present invention, a small-size and large-aperture imaging lens having high resolution performance with axial chromatic aberration corrected in a well-balanced manner while the total optical length is reduced can be formed for a high pixel imaging element having eight million pixels or more, for example.

Further, because all of the lenses in the imaging lens are formed by inexpensive lenses made of resin, variation in field curvature, which becomes a problem at a time of a variation in temperature, can be suppressed while mass productivity is ensured.

<2. Numerical Examples Corresponding to Embodiment>

Numerical examples in which concrete numerical values are applied to the imaging lens according to the present invention will next be described in the following with reference to the drawings and tables. The meanings of symbols used in the numerical examples are as follows.

"FNo" denotes an F-number. "f" denotes the focal length of the entire lens system. "2ω" denotes a total diagonal angle of view. "Si" denotes an ith surface number counted from the object side. "Ri" denotes the radius of curvature of the ith surface. "di" denotes an axial surface interval between the ith surface and an (i + 1)th surface from the object side. "ni" denotes the index of refraction of an ith lens at the d-line (wavelength of 587.6 nm). **"$\nu_i$"** denotes the Abbe number of the ith lens at the d-line (wavelength of 587.6 nm).

"ASP" in relation to the surface number denotes that the surface in question is an aspheric surface. "∞" in relation to the radius of curvature means that the surface in question is a plane.

Some lenses of the imaging lens used in each numerical example have a lens surface formed in an aspheric shape. Letting "Z" be the depth of the aspheric surface, "Y" be a height from the optical axis, "R" be a radius of curvature, "K" be a conic constant, and "A," "B," "C," and "D" be aspheric coefficients of a 4th order, a 6th order, an 8th order, and a 10th order, respectively, the aspheric shape is defined by the following Equation 10.

$$Z = \frac{Y^2/R}{1+\sqrt{1-(1+K)(Y/R)^2}} + AY^4 + BY^6 + CY^8 + DY^{10}$$

$$\ldots(10)$$

(2-1. First Numerical Example)

A reference numeral 1 in FIG. 1 denotes an imaging lens in a first numerical example corresponding as a whole to the embodiment, and has five lenses.

The imaging lens 1 is formed by, in order from an object side, an aperture stop STO, a first lens L1 having positive refractive power, a second lens L2 in a meniscus shape including a concave surface facing an image side and having negative refractive power, a third lens L3 having positive refractive power, a fourth lens L4 in a meniscus shape including a concave surface facing the object side and having positive refractive power in the vicinity of an optical axis, and a fifth lens L5 having negative refractive power in the vicinity of the optical axis and having positive refractive power in a peripheral section.

In addition, in the imaging lens 1, a seal glass SG for protecting an image surface IMG is disposed between the fifth lens L5 and the image surface IMG.

The aperture stop STO in the imaging lens 1 having such a configuration is disposed in a foremost position on the object side.

Thus, in the imaging lens 1, an angle of incidence of a chief ray of the imaging lens 1 with respect to the optical axis can be decreased by disposing the aperture stop STO nearer to the object side than the object side surface of the second lens L2, and bringing the position of an exit pupil as close to the object side as possible. It is thus possible to improve light receiving efficiency, and avoid degradation in image quality due to color mixture.

The imaging lens 1 thus has a five-piece configuration and a power arrangement as described above. It is thereby possible to correct spherical aberration of axial aberrations, comatic aberration of off-axis aberrations, and field curvature, which become a problem when an aperture is enlarged, in a well-balanced manner, while reducing a total optical length.

Table 1 shows lens data when concrete numerical values are applied to the imaging lens 1 according to the first numerical example corresponding to the embodiment together with the F-number FNo, the focal length f of the entire lens system, and the angle of view 2ω. Incidentally, the imaging lens 1 has performance corresponding to a focal length of 36 (mm) when calculated in terms of a 35-mm film. In addition, the radius of curvature Ri being ∞ in Table 1 represents a plane.

Table 1 LENS DATA OF FIRST NUMERICAL EXAMPLE

| FNo=2.06 f=4.80 $2\omega$=61.25° | | | | | |
|---|---|---|---|---|---|
| Si | Ri | ASPHERIC SURFACE | di | ni | $\nu i$ |
| 1 | STO | | 0.00 | | |
| 2 | 2.353 | ASP | 0.77 | 1.535 | 56. 3 |
| 3 | -7.102 | ASP | 0.17 | | |
| 4 | 8.070 | ASP | 0.50 | 1.614 | 25.6 |
| 5 | 1.785 | ASP | 0.50 | | |
| 6 | 9.504 | ASP | 0.76 | 1.535 | 56.3 |
| 7 | -4.200 | | 0.48 | | |
| 8 | -1.680 | ASP | 0.77 | 1. 535 | 56.3 |
| 9 | -1.192 | ASP | 0.10 | | |
| 10 | 4.497 | ASP | 0.76 | 1.535 | 56.3 |
| 11 | 1.278 | ASP | 0.63 | | |
| 12 | ∞ | | 0.15 | 1.517 | 64.2 |
| 13 | ∞ | | 0.61 | | |
| 14 | IMG | | | | |

In the imaging lens 1, the surface (S2) on the object side of the first lens L1, the surface (S3) on the image side of the first lens L1, the surface (S4) on the object side of the second lens L2, the surface (S5) on the image side of the second lens L2, the surface (S6) on the object side of the third lens L3, the surface (S8) on the object side of the fourth lens L4, the surface (S9) on the image side of the fourth lens L4, the surface (S10) on the object side of the fifth lens L5, and the surface (S11) on the image side of the fifth lens L5 are formed in an aspheric shape.

In addition, in the imaging lens 1, the surface (S7) on the image side of the third lens L3 is formed in a spherical shape.

Next, Table 2 shows the aspheric coefficients "A," "B," "C," and "D" of the 4th order, the 6th order, the 8th order, and the 10th order of the aspheric surfaces in the imaging lens 1 according to the first numerical example together with the conic constant "K." Incidentally, "E-02" in Table 2 denotes an exponential representation having a base of 10, that is, "$10^{-2}$." For example, "0.12345E-05" denotes "0.12345 x $10^{-5}$."

Table 2 DATA ON ASPHERIC SURFACES IN FIRST NUMERICAL EXAMPLE

| FNo=2.06 f=4.80 $2\omega$=61.25° | | | | | |
|---|---|---|---|---|---|
| Si | K | A | B | C | D |
| 2 | -0.3971 | 2.413E-03 | -7. 668E-04 | 1.299E-03 | -1.237E-03 |
| 3 | -1.0059 | 2.887E-02 | -1.200E-02 | 2.430E-03 | -1.153E-03 |
| 4 | -10,0000 | -2. 259E-02 | 1.658E-02 | - 1.028E-02 | 2.201E-03 |
| 5 | -4.8257 | 2.885E-02. | 2.423E-03 | -1482E-03 | 4.155E-04 |
| 6 | -1.0391 | -1.680E-02 | 3.132E-03 | 3.579E-03 | -1.035E-03 |
| 8 | -4.9678 | -2.157E-02 | 4.1555H-03 | -1.740E-04 | -6.773E-04 |
| 9 | -3.6687 | -3.313E-02 | 9.685E-03 | -1.072E-03 | 9.539E-05 |
| 10 | -4.7321 | -7.347E-02 | 1.487E-02 | -1.072E-03 | 2. 668E-05 |
| 11 | -6.6856 | -3.433E-02 | 5.382E-03 | -6.826E-04 | 4.095E-05 |

FIG. 2 shows aberrations in the imaging lens 1 according to the first numerical example. In this astigmatism diagram, a solid line indicates values in a sagittal image surface, and a broken line indicates values in a meridional image surface.

Diagrams of the aberrations (a spherical aberration diagram, an astigmatism diagram, and a distortion aberration diagram) in FIG. 2 show that the imaging lens 1 according to the first numerical example excellently corrects the aberrations, and has excellent image forming performance.

Incidentally, the Abbe numbers and the focal lengths of the respective lenses in the imaging lens 1 according to the first numerical example are as shown in Table 3.

Table 3 ABBE NUMBERS AND FOCAL LENGTHS OF LENSES IN FIRST NUMERICAL EXAMPLE

| FNo=2.06 f=4. 80 $2\omega$ =61.25° | |
|---|---:|
| $\nu_1$ | 56.3 |
| $\nu_2$ | 25.6 |
| $\nu_3$ | 56.3 |
| $\nu_4$ | 56.3 |
| $\nu_5$ | 56.3 |
| f | 4.80 |
| $f_1$ | 3. 40 |
| $f_2$ | -3.85 |
| $f_3$ | 5.56 |
| $f_4$ | 4.96 |
| $f_5$ | -3.64 |
| $f_1/f$ | 0.71 |
| $f_2/f$ | -0.80 |
| $f_3/f$ | 1.16 |
| $f_4/f$ | 1.03 |
| $f_5/f$ | -0.76 |

(2-2. Second Numerical Example)

In FIG. 3, in which parts corresponding to those of FIG. 1 are identified by the same reference symbols, a reference numeral 10 denotes an imaging lens in a second numerical example as a whole, which has five lenses also in this case.

The imaging lens 10 is formed by, in order from an object side, a first lens L11 having positive refractive power, an aperture stop STO, a second lens L12 in a meniscus shape including a concave surface facing an image side and having negative refractive power, a third lens L13 having positive refractive power, a fourth lens L14 in a meniscus shape including a concave surface facing the object side and having positive refractive power in the vicinity of an optical axis, and a fifth lens L15 having negative refractive power in the vicinity of the optical axis and having positive refractive power in a peripheral section.

In addition, in the imaging lens 10, a seal glass SG for protecting an image surface IMG is disposed between the fifth lens L15 and the image surface IMG.

The aperture stop STO in the imaging lens 10 having such a configuration is disposed between the first lens L11 and the second lens L12 without being disposed in a foremost position on the object side.

The aperture stop STO of the imaging lens 10 is disposed at a position as close to the front of the optical system as possible (nearer to the object side than the object side surface of the second lens L12). Thereby, as compared with a case in which the aperture stop is disposed nearer to the image side than the object side surface of the second lens L12, the position of an exit pupil is nearer to the front, and the total length of the lens system can be reduced.

The imaging lens 10 thus has a five-piece configuration and a power arrangement as described above. It is thereby possible to correct spherical aberration of axial aberrations, comatic aberration of off-axis aberrations, and field curvature, which become a problem when an aperture is enlarged, in a well-balanced manner, while reducing the total optical length.

Table 4 shows lens data when concrete numerical values are applied to the imaging lens 10 according to the second numerical example together with the F-number FNo, the focal length f of the entire lens system, and the angle of view 2ω. Incidentally, the imaging lens 10 has performance corresponding to a focal length of 35 (mm) when calculated in terms of a 35-mm film.

Table 4 LENS DATA OF SECOND NUMERICAL EXAMPLE

| FNo=2.06 f=4.68 2ω=62.03° | | | | | |
|---|---|---|---|---|---|
| Si | Ri | ASPHERIC SURFACE | di | ni | νi |
| 1 | 2.472 | ASP | 0.74 | 1.535 | 56.3 |
| 2 | -7.714 | ASP | 0.17 | | |
| 3 | STO | | 0.10 | | |
| 4 | 13.709 | ASP | 0.50 | 1.614 | 25.6 |
| 5 | 1.733 | ASP | 0.34 | | |
| 6 | 4.053 | ASP | 0.85 | 1.535 | 56.3 |
| 7 | -4,668 | | 0.56 | | |
| 8 | -1.402 | ASP | 0.70 | 1.535 | 56.3 |
| 9 | -1.068 | ASP | 0.10 | | |
| 10 | 3.487 | ASP | 0.73 | 1.535 | 56.3 |
| 11 | 1.193 | ASP | 0.65 | | |
| 12 | ∞ | | 0.15 | 1.517 | 64.2 |
| 13 | ∞ | | 0.61 | | |
| 14 | IMG | | | | |

In the imaging lens 10, the surface (S1) on the object side of the first lens L11, the surface (S2) on the image side of the first lens L11, the surface (S4) on the object side of the second lens L12, the surface (S5) on the image side of the second lens L12, the surface (S6) on the object side of the third lens L13, the surface (S8) on the object side of the fourth lens L14, the surface (S9) on the image side of the fourth lens L14, the surface (S10) on the object side of the fifth lens L15, and the surface (S11) on the image side of the fifth lens L15 are formed in an aspheric shape.

In addition, in the imaging lens 10, the surface (S7) on the image side of the third lens L13 is formed in a spherical shape.

Next, Table 5 shows the aspheric coefficients "A," "B," "C," and "D" of the 4th order, the 6th order, the 8th order, and the 10th order of the aspheric surfaces in the imaging lens 10 according to the second numerical example together with the conic constant "K." Incidentally, "E-01" in Table 5 denotes an exponential representation having a base of 10, that is, "$10^{-1}$."

Table 5 DATA ON ASPHERIC SURFACES IN SECOND NUMERICAL EXAMPLE

| FNo=2.06 f=4.68 2ω=62.03° | | | | | |
|---|---|---|---|---|---|
| Si | K | A | B | C | D |
| 1 | -0.3579 | 2.906E-03 | -1.072E-03 | 2.280E-03 | -1.395E-03 |
| 2 | 3.3143 | 2.732E-02 | -8.211E-03 | 1.782E-03 | -1.454E-03 |
| 4 | -9.9978 | -3.299E-02 | 2.715E-02 | -1809E-02 | 3.452E-03 |
| 5 | -5.3927 | 2.726E-02 | 4.443E-03 | -6.909E-03 | 1.647E-03 |
| 6 | -3.1657 | -1.829E-02 | 1.169E-02 | -5.041E-04 | -6.467E-04 |
| 8 | -3.8611 | -2.826E-02 | 1.364E-02 | -1.126E-03 | -8.285E-04 |
| 9 | -3.977 | -3.138E-02 | 1.083E-02 | 1.478E-03 | -5.565E-04 |
| 10 | -1.7578 | -7.418E-02 | 1.404E-02 | -1.052E-03 | 3.163-05 |

(continued)

| FNo=2.06 f=4.68 2ω=62.03° | | | | | |
| --- | --- | --- | --- | --- | --- |
| Si | K | A | B | C | D |
| 11 | -6.5043 | -3.253E-02 | 4.446E-03 | -5.464E-04 | 3.794E-05 |

FIG. 4 shows aberrations in the imaging lens 10 according to the second numerical example. Also in this astigmatism diagram, a solid line indicates values in a sagittal image surface, and a broken line indicates values in a meridional image surface.

Diagrams of the aberrations (a spherical aberration diagram, an astigmatism diagram, and a distortion aberration diagram) in FIG. 4 show that the imaging lens 10 according to the second numerical example excellently corrects the aberrations, and has excellent image forming performance.

Incidentally, the Abbe numbers and the focal lengths of the respective lenses in the imaging lens 10 according to the second numerical example are as shown in Table 6.

Table 6 ABBE NUMBERS AND FOCAL LENGTHS OF LENSES IN SECOND NUMERICAL EXAMPLE

| FNo=2.06 f=4.68 2ω=62.03° | |
| --- | --- |
| $\nu_1$ | 56.3 |
| $\nu_2$ | 25.6 |
| $\nu_3$ | 56.3 |
| $\nu_4$ | 56.3 |
| $\nu_5$ | 56.3 |
| f | 4.68 |
| $f_1$ | 3.59 |
| f2 | -3.28 |
| $f_3$ | 4.20 |
| $f_4$ | 4.86 |
| $f_5$ | -3.81 |
| f1/f | 0.77 |
| $f_2/f$ | -0.70 |
| $f_3/f$ | 0.90 |
| $f_4/f$ | 1.04 |
| $f_5/f$ | -0.81 |

(2-3. Third Numerical Example)

In FIG. 5, in which parts corresponding to those of FIG. 1 are identified by the same reference symbols, a reference numeral 20 denotes an imaging lens in a third numerical example as a whole, which has five lenses also in this case.

The imaging lens 20 is formed by, in order from an object side, an aperture stop STO, a first lens L21 having positive refractive power, a second lens L22 in a meniscus shape including a concave surface facing an image side and having negative refractive power, a third lens L23 having positive refractive power, a fourth lens L24 in a meniscus shape including a concave surface facing the object side and having positive refractive power in the vicinity of an optical axis, and a fifth lens L25 having negative refractive power in the vicinity of the optical axis and having positive refractive power in a peripheral section.

In addition, in the imaging lens 20, a seal glass SG for protecting an image surface IMG is disposed between the fifth lens L25 and the image surface IMG.

The aperture stop STO in the imaging lens 20 having such a configuration is disposed in a foremost position on the object side.

Thus, in the imaging lens 20, an angle of incidence of a chief ray of the imaging lens 20 with respect to the optical axis can be decreased by disposing the aperture stop STO nearer to the object side than the object side surface of the second lens L22, and bringing the position of an exit pupil as close to the object side as possible. It is thus possible to improve light receiving efficiency, and avoid degradation in image quality due to color mixture.

The imaging lens 20 thus has a five-piece configuration and a power arrangement as described above. It is thereby possible to correct spherical aberration of axial aberrations, comatic aberration of off-axis aberrations, and field curvature, which become a problem when an aperture is enlarged, in a well-balanced manner, while reducing a total optical length.

Table 7 shows lens data when concrete numerical values are applied to the imaging lens 20 according to the third numerical example together with the F-number FNo, the focal length f of the entire lens system, and the angle of view 2ω. Incidentally, the imaging lens 20 has performance corresponding to a focal length of 30 (mm) when calculated in terms of a 35-mm film.

Table 7 LENS DATA OF THIRD NUMERICAL EXAMPLE

| FNo=1.96 f=3.95 2ω=70.49° | | | | | |
|---|---|---|---|---|---|
| Si | Ri | ASPHERIC SURFACE | di | ni | νi |
| 1 | ST0 | | 0.00 | | |
| 2 | 2.209 | ASP | 0.68 | 1.535 | 56.3 |
| 3 | -6.104 | ASP | 0.05 | | |
| 4 | 3.204 | ASP | 0.36 | 1.635 | 23.9 |
| 5 | 1.386 | ASP | 0.47 | | |
| 6 | 9.232 | ASP | 0.66 | 1.535 | 56.3 |
| 7 | -4.967 | ASP | 0.22 | | |
| 8 | -1.488 | ASP | 0.66 | 1.535 | 56.3 |
| 9 | -1.098 | ASP | 0.05 | | |
| 10 | 2.972 | ASP | 0.77 | 1.535 | 56.3 |
| 11 | 1.127 | ASP | 0.62 | | |
| 12 | ∞ | | 0.10 | 1.517 | 64.2 |
| 13 | ∞ | | 0.61 | | |
| 14 | IMG | | | | |

In the imaging lens 20, the surface (S2) on the object side of the first lens L21, the surface (S3) on the image side of the first lens L21, the surface (S4) on the object side of the second lens L22, the surface (S5) on the image side of the second lens L22, the surface (S6) on the object side of the third lens L23, the surface (S7) on the image side of the third lens L23, the surface (S8) on the object side of the fourth lens L24, the surface (S9) on the image side of the fourth lens L24, the surface (S10) on the object side of the fifth lens L25, and the surface (S11) on the image side of the fifth lens L25 are formed in an aspheric shape.

Next, Table 8 shows the aspheric coefficients "A," "B," "C," and "D" of the 4th order, the 6th order, the 8th order, and the 10th order of the aspheric surfaces in the imaging lens 20 according to the third numerical example together with the conic constant "K." Incidentally, "E-02" in Table 8 denotes an exponential representation having a base of 10, that is, "$10^{-2}$."

Table 8 DATA ON ASPHERIC SURFACES IN THIRD NUMERICAL EXAMPLE

| FNo=1.96 f=3.95 2ω=70.49° | | | | | |
|---|---|---|---|---|---|
| Si | K | A | B | C | D |
| 2 | -0.3867 | 5.169E-03 | -1.301E-02 | 6.861E-03 | -5.403E-03 |
| 3 | -10.0000 | 4.083E-02 | -3.991E-02 | 1.484E-02 | -3.951E-03 |
| 4 | -10.0000 | -4.201E-02 | 5.687E-02 | -4.813E-02 | 1.981E-02 |

(continued)

| FNo=1.96 f=3.95 $2\omega$=70.49° | | | | | |
|---|---|---|---|---|---|
| Si | K | A | B | C | D |
| 5 | -4.5578 | 3.421E-02 | 1.518E-02 | -8.968E-03 | 4.00E-03 |
| 6 | -7.2167 | -4.815E-02 | 1.817E-02 | -2.935E.03 | 3.590E-03 |
| 7 | 0 | -3.145E-02 | 1.660E-03 | 1.549E-03 | 2-413E-03 |
| 8 | -5. 3249 | 1.709E-02 | 7.411E-03 | 1.859E-03 | -9.001E-04 |
| 9 | -3.7510 | -8. 327E-03 | 2.227E-02 | -1.706E-03 | -4.683E-04 |
| 10 | -2.3494 | -9.754E-02 | 1.808E-02 | -3.946E-04 | -9.765E-05 |
| 11 | -6.3874 | -4.192E-02 | 6.709E-03 | -8.768E-04 | 5.127E-05 |

FIG. 6 shows aberrations in the imaging lens 20 according to the third numerical example. Also in this astigmatism diagram, a solid line indicates values in a sagittal image surface, and a broken line indicates values in a meridional image surface.

Diagrams of the aberrations (a spherical aberration diagram, an astigmatism diagram, and a distortion aberration diagram) in FIG. 6 show that the imaging lens 20 according to the third numerical example excellently corrects the aberrations, and has excellent image forming performance.

Incidentally, the Abbe numbers and the focal lengths of the respective lenses in the imaging lens 20 according to the third numerical example are as shown in Table 9.

Table 9 ABBE NUMBERS AND FOCAL LENGTHS OF LENSES IN THIRD NUMERICAL EXAMPLE

| FNo=1.96 f=3.95 $2\omega$=70.49° | |
|---|---|
| $\nu_1$ | 56.3 |
| $\nu_2$ | 23.9 |
| $\nu_3$ | 56.3 |
| $\nu_4$ | 56.3 |
| $\nu_5$ | 56.3 |
| f | 3.95 |
| $f_1$ | 3.12 |
| $f_2$ | -4.17 |
| $f_3$ | 6.14 |
| $f_4$ | 4.93 |
| $f_5$ | -3.97 |
| $f_1/f$ | 0.79 |
| $f_2/f$ | -1.06 |
| $f_3/f$ | 1.55 |
| $f_4/f$ | 1.25 |
| $f_5/f$ | -1.01 |

(2-4. Fourth Numerical Example)

In FIG. 7, in which parts corresponding to those of FIG. 1 are identified by the same reference symbols, a reference numeral 30 denotes an imaging lens in a fourth numerical example as a whole, which has five lenses also in this case.

The imaging lens 30 is formed by, in order from an object side, an aperture stop STO, a first lens L31 having positive refractive power, a second lens L32 in a meniscus shape including a concave surface facing an image side and having negative refractive power, a third lens L33 having positive refractive power, a fourth lens L34 in a meniscus shape including a concave surface facing the object side and having positive refractive power in the vicinity of an optical axis, and a fifth lens L35 having negative refractive power in the vicinity of the optical axis and having positive refractive power in a peripheral section.

In addition, in the imaging lens 30, a seal glass SG for protecting an image surface IMG is disposed between the fifth lens L35 and the image surface IMG.

The aperture stop STO in the imaging lens 30 having such a configuration is disposed in a foremost position on the object side.

Thus, in the imaging lens 30, an angle of incidence of a chief ray of the imaging lens 30 with respect to the optical axis can be decreased by disposing the aperture stop STO nearer to the object side than the object side surface of the second lens L32, and bringing the position of an exit pupil as close to the object side as possible. It is thus possible to improve light receiving efficiency, and avoid degradation in image quality due to color mixture.

The imaging lens 30 thus has a five-piece configuration and a power arrangement as described above. It is thereby possible to correct spherical aberration of axial aberrations, comatic aberration of off-axis aberrations, and field curvature, which become a problem when an aperture is enlarged, in a well-balanced manner, while reducing a total optical length.

Table 10 shows lens data when concrete numerical values are applied to the imaging lens 30 according to the fourth numerical example together with the F-number FNo, the focal length f of the entire lens system, and the angle of view 2ω. Incidentally, the imaging lens 30 has performance corresponding to a focal length of 30 (mm) when calculated in terms of a 35-mm film.

Table 10 LENS DATA OF FOURTH NUMERICAL EXAMPLE

| FNo=1.97 f=3.99 2ω=70.09° | | | | | |
|---|---|---|---|---|---|
| Si | Ri | ASPHERIC SURFACE | di | ni | νi |
| 1 | ST0 | | 0.00 | | |
| 2 | 2.292 | ASP | 0.67 | 1.535 | 56.3 |
| 3 | -7.608 | ASP | 0.05 | | |
| 4 | 3.025 | ASP | 0.36 | 1.614 | 25.6 |
| 5 | 1.555 | ASP | 0.56 | | |
| 6 | 78.228 | ASP | 0.58 | 1.535 | 56.3 |
| 7 | -4.828 | ASP | 0.16 | | |
| 8 | -1.155 | ASP | 0.69 | 1.535 | 56.3 |
| 9 | -1.154 | ASP | 0.05 | | |
| 10 | 3.662 | ASP | 0.82 | 1.535 | 56.3 |
| 11 | 1.171 | ASP | 0.62 | | |
| 12 | ∞ | | 0.10 | 1.517 | 64.2 |
| 13 | ∞ | | 0.61 | | |
| 14 | IMG | | | | |

In the imaging lens 30, the surface (S2) on the object side of the first lens L31, the surface (S3) on the image side of the first lens L31, the surface (S4) on the object side of the second lens L32, the surface (S5) on the image side of the second lens L32, the surface (S6) on the object side of the third lens L33, the surface (S7) on the image side of the third lens L33, the surface (S8) on the object side of the fourth lens L34, the surface (S9) on the image side of the fourth lens L34, the surface (S10) on the object side of the fifth lens L35, and the surface (S11) on the image side of the fifth lens L35 are formed in an aspheric shape.

Next, Table 11 shows the aspheric coefficients "A," "B," "C," and "D" of the 4th order, the 6th order, the 8th order, and the 10th order of the aspheric surfaces in the imaging lens 30 according to the fourth numerical example together with the conic constant "K." Incidentally, "E-02" in Table 11 denotes an exponential representation having a base of 10, that is, "$10^{-2}$."

Table 11 DATA ON ASPHERIC SURFACES IN FOURTH NUMERICAL EXAMPLE

| FNo=1.97 f=3.99 2ω=70.09° | | | | | |
|---|---|---|---|---|---|
| Si | K | A | B | C | D |
| 2 | -0.6982 | 1.526E-03 | -1.725E-02 | 7.587E-03 | -7.420E-03 |
| 3 | 10.0000 | 2. 075E-02 | -3.339E-02 | 1.104E-02 | -3. 639E-03 |
| 4 | -3.7306 | -3.567E-02 | 4.749E-02 | -4.724E-02. | 2.328E-02 |
| 5 | -4.1515 | 3.774E-02 | 1.62BE-02 | -1.643E-02 | 1.032E-02 |
| 6 | -9.9974 | -6.540E-02 | 1.474E-02 | -1.304E-04 | 6. 965E-03 |
| 7 | 0 | -4.083E-02 | 2.333E-04 | 1.469E-03 | 4.157E-03 |
| 8 | -7.2386 | 2. 355E-02 | 4.654E-03 | 1.604-03 | -1.117E-03 |
| 9 | -3.9309 | -7. 468E-03 | 2.357E-02 | -2.123E-03 | -5.176E-04 |
| 10 | -2.8104 | -9. 596E-02 | 1.898E-02 | -3.675E-04 | -1.250E-04 |
| 11 | -6.5307 | -4.232E-02 | 7.853E-03 | -1.176E-03 | 7.084E-05 |

FIG. 8 shows aberrations in the imaging lens 30 according to the fourth numerical example. Also in this astigmatism diagram, a solid line indicates values in a sagittal image surface, and a broken line indicates values in a meridional image surface.

Diagrams of the aberrations (a spherical aberration diagram, an astigmatism diagram, and a distortion aberration diagram) in FIG. 8 show that the imaging lens 30 according to the fourth numerical example excellently corrects the aberrations, and has excellent image forming performance.

Incidentally, the Abbe numbers and the focal lengths of the respective lenses in the imaging lens 30 according to the fourth numerical example are as shown in Table 12.

Table 12 ABBE NUMBERS AND FOCAL LENGTHS OF LENSES IN FOURTH NUMERICAL EXAMPLE

| FNo=1.97    f=3.99    2ω=70.09° | |
|---|---|
| $\nu_1$ | 56.3 |
| $\nu_2$ | 25.6 |
| $\nu_3$ | 56.3 |
| $\nu_4$ | 56.3 |
| $\nu_5$ | 56.3 |
| f | 3.99 |
| $f_1$ | 3.37 |
| $f_2$ | -5.74 |
| $f_3$ | 8.53 |
| $f_4$ | 4.50 |
| $f_5$ | -3.63 |
| $f_1/f$ | 0.85 |
| $f_2/f$ | -1.44 |
| $f_3/f$ | 2.14 |
| $f_4/f$ | 1.3 |
| $f_5/f$ | -0.91 |

(2-5. Fifth Numerical Example)

In FIG. 9, in which parts corresponding to those of FIG. 1 are identified by the same reference symbols, a reference numeral 40 denotes an imaging lens in a fifth numerical example as a whole, which has five lenses also in this case.

The imaging lens 40 is formed by, in order from an object side, an aperture stop STO, a first lens L41 having positive refractive power, a second lens L42 in a meniscus shape including a concave surface facing an image side and having negative refractive power, a third lens L43 having positive refractive power, a fourth lens L44 in a meniscus shape including a concave surface facing the object side and having positive refractive power in the vicinity of an optical axis, and a fifth lens L45 having negative refractive power in the vicinity of the optical axis and having positive refractive power in a peripheral section.

In addition, in the imaging lens 40, a seal glass SG for protecting an image surface IMG is disposed between the fifth lens L45 and the image surface IMG.

The aperture stop STO in the imaging lens 40 having such a configuration is disposed in a foremost position on the object side.

Thus, in the imaging lens 40, an angle of incidence of a chief ray of the imaging lens 40 with respect to the optical axis can be decreased by disposing the aperture stop STO nearer to the object side than the object side surface of the second lens L42, and bringing the position of an exit pupil as close to the object side as possible. It is thus possible to improve light receiving efficiency, and avoid degradation in image quality due to color mixture.

The imaging lens 40 thus has a five-piece configuration and a power arrangement as described above. It is thereby possible to correct spherical aberration of axial aberrations, comatic aberration of off-axis aberrations, and field curvature, which become a problem when an aperture is enlarged, in a well-balanced manner, while reducing a total optical length.

Table 13 shows lens data when concrete numerical values are applied to the imaging lens 40 according to the fifth numerical example together with the F-number FNo, the focal length f of the entire lens system, and the angle of view 2ω. Incidentally, the imaging lens 40 has performance corresponding to a focal length of 34 (mm) when calculated in terms of a 35-mm film.

Table 13 LENS DATA OF FIFTH NUMERICAL EXAMPLE

| FN0=1.99      f=4.43      2ω=65. 08° | | | | | |
|------|--------|-------------------|------|-------|------|
| Si | Ri | ASPHERIC SURFACE | di | ni | νi |
| 1 | ST0 | | 0.00 | | |
| 2 | 2.408 | ASP | 0.77 | 1.535 | 56.3 |
| 3 | -5.401 | ASP | 0.10 | | |
| 4 | 4.463 | ASP | 0.41 | 1.614 | 25.6 |
| 5 | 1.473 | ASP | 0.52 | | |
| 6 | 7.094 | ASP | 0.93 | 1.535 | 56.3 |
| 7 | -3,666 | ASP | 0.19 | | |
| 8 | -1.196 | ASP | 0.52 | 1.535 | 56.3 |
| 9 | -1.313 | ASP | 0.11 | | |
| 10 | 2.692 | ASP | 1.00 | 1.535 | 56.3 |
| 11 | 1.493 | ASP | 0.61 | | |
| 12 | ∞ | | 0.15 | 1.517 | 64.2 |
| 13 | ∞ | | 0.60 | | |
| 14 | IMG | | | | |

In the imaging lens 40, the surface (S2) on the object side of the first lens L41, the surface (S3) on the image side of the first lens L41, the surface (S4) on the object side of the second lens L42, the surface (S5) on the image side of the second lens L42, the surface (S6) on the object side of the third lens L43, the surface (S7) on the image side of the third lens L43, the surface (S8) on the object side of the fourth lens L44, the surface (S9) on the image side of the fourth lens L44, the surface (S10) on the object side of the fifth lens L45, and the surface (S11) on the image side of the fifth lens L45 are formed in an aspheric shape.

Next, Table 14 shows the aspheric coefficients "A," "B," "C," and "D" of the 4th order, the 6th order, the 8th order, and the 10th order of the aspheric surfaces in the imaging lens 40 according to the fifth numerical example together with the conic constant "K." Incidentally, "E-02" in Table 14 denotes an exponential representation having a base of 10, that is, "$10^{-2}$."

Table 14 DATA ON ASPHERIC SURFACES IN FIFTH NUMERICAL EXAMPLE

| FNo=1.99 f=4.43 $2\omega$=65.08° | | | | | |
|---|---|---|---|---|---|
| Si | K | A | B | C | D |
| 2 | -0.4769 | 3.410E-03 | -9.270E-03 | 6.640E-03 | -4.085E-03 |
| 3 | -6.2918 | 3.931E-02 | -2.858E-02 | 7.985E-03 | -2.856E-03 |
| 4 | -10.0000 | -4.367E-02 | 5.429E-02 | -4.162E-02 | 1.250E-02 |
| 5 | -4.6769 | 2.921E-02 | 1.641E-02 | -1.135E-02 | 3.143E-03 |
| 6 | 2.2220 | -3.835E-02 | 1.238E-02 | -6.049E-03 | 2.504E-03 |
| 7 | 0 | -3. 274E-02 | 3.702E-03 | -1.009E-03 | 8.627E-04 |
| 8 | -4.1223 | 2.593E-03 | 7.944E-03 | 1.879E-03 | -7.157E-04 |
| 9 | -3.7472 | -7.183E-03 | 1.734E-02 | -1.343E-03 | -2.220E-04 |
| 10 | -5.8991 | -9.208E-02 | 1.803E-02 | -4.729E-04 | -8.578E-05 |
| 11 | -5.9694 | -3.688E-02 | 5.361E-03 | -5.641E-04 | 2.943E-05 |

FIG. 10 shows aberrations in the imaging lens 40 according to the fifth numerical example. Also in this astigmatism diagram, a solid line indicates values in a sagittal image surface, and a broken line indicates values in a meridional image surface.

Diagrams of the aberrations (a spherical aberration diagram, an astigmatism diagram, and a distortion aberration diagram) in FIG. 10 show that the imaging lens 40 according to the fifth numerical example excellently corrects the aberrations, and has excellent image forming performance.

Incidentally, the Abbe numbers and the focal lengths of the respective lenses in the imaging lens 40 according to the fifth numerical example are as shown in Table 15.

Table 15 ABBE NUMBERS AND FOCAL LENGTHS OF LENSES IN FIFTH NUMERICAL EXAMPLE

| FNo=1.99   f=4.43   $2\omega$=65.08° | |
|---|---|
| $\nu_1$ | 56.3 |
| $\nu_2$ | 25.6 |
| $\nu_3$ | 56.3 |
| $\nu_4$ | 56.3 |
| $\nu_5$ | 56.3 |
| f | 4.43 |
| $f_1$ | 3.23 |
| $f_2$ | -3.77 |
| $f_3$ | 4.66 |
| $f_4$ | 47.00 |
| $f_5$ | -8.83 |
| $f_1$/f | 0.73 |
| $f_2$/f | -0.85 |

(continued)

| FNo=1.99    f=4.43    $2\omega$=65.08° | |
|---|---|
| $f_3/f$ | 1.05 |
| $f_4/f$ | 10.60 |
| $f_5/f$ | -1.99 |

(2-6. Values Corresponding to Conditional Expressions)

Next, values in the first to fifth numerical examples which values correspond to the conditional expressions (1) to (9) are derived on the basis of Table 3, Table 6, Table 9, Table 12, and Table 15, and are shown in Table 16.

TABLE 16 VALUES CORRESPONDING TO CONDITIONAL EXPRESSIONS

| CONDITIONAL EXPRESSION | | FIRST EXAMPLE | SECOND EXAMPLE | THIRD EXAMPLE | FOURTH EXAMPLE | FIFTH EXAMPLE |
|---|---|---|---|---|---|---|
| (1) | $\nu_1$>50 | 56.3 | 56.3 | 56.3 | 56.3 | 56.3 |
| (2) | $\nu_2$<30 | 25.6 | 25.6 | 23.9 | 25.6 | 25.6 |
| (3) | $\nu_3$>50 | 56.3 | 56.3 | 56.3 | 56.3 | 56.3 |
| (4) | $\nu_4$>50 | 56.3 | 56.3 | 56.3 | 56.3 | 56.3 |
| (5) | 0<$f_3/f_4$<3.0 | 1.12 | 0.86 | 1.24 | 1.89 | 0.10 |
| (6) | 0.5<\|$f_1/f_2$\|<1.3 | 0.88 | 1.09 | 0.75 | 0.59 | 0.85 |
| (7) | 0.6<\|$f_1/f_2$\|<1.0 | 0.88 | (1.09) | 0.75 | (0.59) | 0.85 |
| (8) | 0.5<\|$f_5/f$\|<3.0 | 0.76 | 0.81 | 1.01 | 0.91 | 1.99 |
| (9) | $\nu_5$>50 | 56.3 | 56.3 | 56.3 | 56.3 | 56.3 |

According to Table 16, as shown for the conditional expression (1), it can be seen that the Abbe numbers $\nu_1$ at the d-line of the first lenses L1 (FIG. 1), L11 (FIG. 3), L21 (FIG. 5), L31 (FIG. 7), and L41 (FIG. 9) in the first to fifth numerical examples are all "56.3," and thus satisfy the conditional expression (1) $\nu_1$ > 50.

In addition, according to Table 16, as shown for the conditional expression (2), it can be seen that the Abbe numbers $\nu_2$ at the d-line of the second lenses L2 (FIG. 1), L12 (FIG. 3), L22 (FIG. 5), L32 (FIG. 7), and L42 (FIG. 9) in the first to fifth numerical examples satisfy the conditional expression (2) $\nu_2$ < 30, with a maximum of "25.6" in the first numerical example, the second numerical example, the fourth numerical example, and the fifth numerical example.

Further, according to Table 16, as shown for the conditional expression (3), it can be seen that the Abbe numbers $\nu_3$ at the d-line of the third lenses L3 (FIG. 1), L13 (FIG. 3), L23 (FIG. 5), L33 (FIG. 7), and L43 (FIG. 9) in the first to fifth numerical examples are all "56.3," and thus satisfy the conditional expression (3) $\nu_3$ > 50.

Further, according to Table 16, as shown for the conditional expression (4), it can be seen that the Abbe numbers $\nu_4$ at the d-line of the fourth lenses L4 (FIG. 1), L14 (FIG. 3), L24 (FIG. 5), L34 (FIG. 7), and L44 (FIG. 9) in the first to fifth numerical examples are all "56.3," and thus satisfy the conditional expression (4) $\nu_4$ > 50.

Further, according to Table 16, as shown for the conditional expression (5), it can be seen that "$f_3/f_4$" satisfies the conditional expression (5) 0 < $f_3/f_4$ < 3.0, "0.10" in the fifth numerical example being a minimum value of $f_3/f_4$, and "1.89" in the fourth numerical example being a maximum value of $f_3/f_4$.

Further, according to Table 16, as shown for the conditional expression (6), it can be seen that "\|$f_1/f_2$\|" satisfies the conditional expression (6) 0.5 < \|$f_1/f_2$\| < 1.3, "0.59" in the fourth numerical example being a minimum value of \|$f_1/f_2$\|, and "1.09" in the second numerical example being a maximum value of \|$f_1/f_2$\|.

Further, according to Table 16, it can be seen that while "0.59" in the fourth numerical example and "1.09" in the second numerical example fall outside the numerical value range of the conditional expression (7) 0.6 < \|$f_1/f_2$\| < 1.0, the conditional expression (7) is satisfied in the first numerical example, the third numerical example, and the fifth numerical example excluding the fourth numerical example and the second numerical example, "0.75" in the third numerical example being a minimum value, and "0.88" in the first numerical example being a maximum value, as shown for the conditional expression (7).

Thus, as shown in the aberration diagrams of FIG. 2, FIG. 6, and FIG. 10, the imaging lens 1 according to the first numerical example, the imaging lens 20 according to the third numerical example, and the imaging lens 40 according to the fifth numerical example correct aberrations more excellently, and have more excellent image forming performance than the imaging lens 10 according to the second numerical example and the imaging lens 30 according to the fourth numerical example shown in FIG. 4 and FIG. 8.

Incidentally, "1.09" in the second numerical example and "0.59" in the fourth numerical example falling outside the numerical value range of the conditional expression (7) in Table 16 are shown in parentheses.

Further, according to Table 16, as shown for the conditional expression (8), it can be seen that "$|f_5/f|$" satisfies the conditional expression (8) $0.5 < |f_5/f| < 3.0$, "0.76" in the first numerical example being a minimum value of $|f_5/f|$, and "1.99" in the fifth numerical example being a maximum value of $|f_5/f|$.

Finally, according to Table 16, as shown for the conditional expression (9), it can be seen that the Abbe numbers $\nu_5$ at the d-line of the fifth lenses L5 (FIG. 1), L15 (FIG. 3), L25 (FIG. 5), L35 (FIG. 7), and L45 (FIG. 9) in the first to fifth numerical examples are all "56.3," and thus satisfy the conditional expression (9) $\nu_5 > 50$.

The imaging lenses 1, 10, 20, 30, and 40 in the first to fifth numerical examples therefore satisfy the conditional expressions (1) to (6), the conditional expression (8), and the conditional expression (9) described above.

In addition, the imaging lenses 1, 20, and 40 in the first numerical example and the third to fifth numerical examples excluding the second numerical example and the fourth numerical example satisfy all of the conditional expressions (1) to (9) described above.

Thus, the imaging lenses 1, 10, 20, 30, and 40 in the first to fifth numerical examples can excellently correct spherical aberration of axial aberrations, comatic aberration of off-axis aberrations, and field curvature, and have optical performance that can sufficiently correspond with a high pixel imaging element having eight million pixels or more, for example, when the aperture is enlarged to an F-number of about 2.0.

In addition, the imaging lenses 1, 10, 20, 30, and 40 in the first to fifth numerical examples can excellently correct axial chromatic aberration while the total optical length is reduced, and have high resolution performance necessary as the aperture is enlarged to an F-number of about 2.0.

<3. Imaging Device and Portable Telephone>

(3-1. Configuration of Imaging Device)

Description will next be made of an imaging device having a configuration formed by combining the imaging lens according to the present invention with an imaging element such for example as a CCD (Charge Coupled Device) sensor or a CMOS (Complementary Metal Oxide Semiconductor) sensor for converting an optical image formed by the imaging lens into an electric signal.

Incidentally, the following description will be made of an imaging device to which an imaging lens having an aperture stop disposed in a foremost position on an object side (for example the imaging lens 1 in the foregoing first numerical example) is applied. However, an imaging lens having an aperture stop disposed between a first lens and a second lens, such as the imaging lens 10 in the foregoing second numerical example (FIG. 3), can also be similarly applied to an imaging device. Incidentally, the imaging lens applied to the imaging device has performance corresponding to a range of 24 to 40 (mm) as focal length of the entire lens system when calculated in terms of a 35-mm film.

The imaging lens provided to the imaging device is formed by, in order from an object side, an aperture stop, a first lens having positive refractive power, a second lens in a meniscus shape including a concave surface facing an image side and having negative refractive power, a third lens having positive refractive power, a fourth lens in a meniscus shape including a concave surface facing the object side and having positive refractive power in the vicinity of an optical axis, and a fifth lens having negative refractive power in the vicinity of the optical axis and having positive refractive power in a peripheral section.

The imaging lens in the imaging device thus has a five-piece configuration and a power arrangement as described above. It is thereby possible to correct spherical aberration of axial aberrations, comatic aberration of off-axis aberrations, and field curvature, which become a problem when an aperture is enlarged, in a well-balanced manner, while reducing a total optical length.

The aperture stop in the imaging lens of the imaging device having such a configuration is disposed in a foremost position on the object side.

Thus, in the imaging lens of the imaging device, an angle of incidence of a chief ray of the imaging lens with respect to the optical axis can be decreased by disposing the aperture stop nearer to the object side than the object side surface of the second lens, and bringing the position of an exit pupil as close to the object side as possible. It is thus possible to improve light receiving efficiency, and avoid degradation in image quality due to color mixture.

In addition, all of the first to fifth lenses of the imaging lens in the imaging device are formed by lenses made of resin, and formed so as to satisfy the conditional expression (1), the conditional expression (2), the conditional expression (3), and the conditional expression (4) in the following:

$$(1) \quad \nu_1 > 50$$

$$(2) \quad \nu_2 < 30$$

$$(3) \quad \nu_3 > 50$$

$$(4) \quad \nu_4 > 50$$

where

$\nu_1$ is the Abbe number of the first lens at the d-line (wavelength of 587.6 nm),
$\nu_2$ is the Abbe number of the second lens at the d-line (wavelength of 587.6 nm),
$\nu_3$ is the Abbe number of the third lens at the d-line (wavelength of 587.6 nm), and
$\nu_4$ is the Abbe number of the fourth lens at the d-line (wavelength of 587.6 nm).

The conditional expression (1) defines the Abbe number of the first lens at the d-line. The conditional expression (2) defines the Abbe number of the second lens at the d-line. The conditional expression (3) defines the Abbe number of the third lens at the d-line. The conditional expression (4) defines the Abbe number of the fourth lens at the d-line. The conditional expressions represent conditions for excellently correcting chromatic aberration occurring in the lens system.

When the imaging lens deviates from the specified values of the conditional expression (1), the conditional expression (2), the conditional expression (3), and the conditional expression (4), the correction of axial chromatic aberration, which is necessary in enlarging the aperture with an F-number of about 2.0, becomes difficult.

The imaging lens in the imaging device can thus correct axial chromatic aberration excellently by satisfying the conditional expression (1), the conditional expression (2), the conditional expression (3), and the conditional expression (4).

Further, because all the lenses of the imaging lens in the imaging device are formed by lenses made of resin as a same material, amounts of change in refractive power in all the lenses at a time of a variation in temperature can be made to be uniform, and thus variation in field curvature, which becomes a problem at a time of a variation in temperature, can be suppressed.

In addition, because all of the lenses of the imaging lens in the imaging device are formed by inexpensive and lightweight lenses made of resin, the imaging lens as a whole can be reduced in weight while mass productivity is ensured.

Further, the imaging lens in the imaging device is formed so as to satisfy a conditional expression (5) in the following:

$$(5) \quad 0 < f_3/f_4 < 3.0$$

where

$f_3$ is the focal length of the third lens, and
$f_4$ is the focal length of the fourth lens.

The conditional expression (5) defines a ratio between the focal length $f_3$ of the third lens and the focal length $f_4$ of the fourth lens, and limits a balance between the refractive power of the third lens and the refractive power of the fourth lens.

When the imaging lens in the imaging device deviates from the upper limit value of the conditional expression (5), the power (refractive power) of the third lens becomes too weak, and the correction of axial chromatic aberration becomes difficult, so that excellent optical performance cannot be maintained. When the imaging lens deviates from the lower limit value, on the other hand, the power of the third lens becomes strong, which is advantageous in terms of aberration correction, but the power of the fourth lens becomes too weak, and the total optical length is increased, so that the miniaturization of the present lens system becomes difficult.

Thus, in the imaging lens of the imaging device, by satisfying the conditional expression (5), it is possible to reduce the total optical length while effectively correcting axial chromatic aberration and ensuring excellent optical performance.

Further, the imaging lens in the imaging device is formed so as to satisfy a conditional expression (6) in the following:

$$(6) \quad 0.5 < |f_1/f_2| < 1.3$$

where

$f_1$ is the focal length of the first lens, and
$f_2$ is the focal length of the second lens.

The conditional expression (6) defines a ratio between the focal length $f_1$ of the first lens and the focal length $f_2$ of the second lens, and limits a balance between the refractive power of the first lens and the refractive power of the second lens.

When the imaging lens in the imaging device deviates from the upper limit value of the conditional expression (6), the power of the second lens becomes strong, which is advantageous in terms of aberration correction, but the power of the second lens becomes too strong, and the total optical length is increased, so that the miniaturization of the present lens system becomes difficult. When the imaging lens deviates from the lower limit value, on the other hand, the power of the second lens becomes too weak, and the correction of axial chromatic aberration becomes difficult, so that excellent optical performance cannot be maintained.

Thus, in the imaging lens of the imaging device, by satisfying the conditional expression (6), it is possible to reduce the total optical length while effectively correcting axial chromatic aberration and ensuring excellent optical performance.

Further, the conditional expression (6) is desirably set so as to satisfy a range shown in a conditional expression (7).

$$(7) \quad 0.6 < |f_1/f_2| < 1.0$$

Thus, in the imaging lens of the imaging device, by satisfying the conditional expression (7), the reduction of the total optical length and the correction of axial chromatic aberration can be achieved in a better balanced manner.

Further, the imaging lens in the imaging device is formed to satisfy a conditional expression (8) and a conditional expression (9) in the following:

$$(8) \quad 0.5 < |f_5/f| < 3.0$$

$$(9) \quad \nu_5 > 50$$

where

f is the focal length of the entire lens system,
$f_5$ is the focal length of the fifth lens, and
$\nu_5$ is the Abbe number of the fifth lens at the d-line (wavelength of 587.6 nm).

The conditional expression (8) defines a ratio between the focal length $f_5$ of the fifth lens and the focal length f of the entire lens system, and limits the power of the fifth lens.

When the imaging lens in the imaging device deviates from the upper limit value of the conditional expression (8), the power of the fifth lens becomes weak, which is advantageous in terms of aberration correction, but the total optical length is increased, so that the miniaturization of the present lens system becomes difficult. When the imaging lens deviates from the lower limit value, on the other hand, the power of the fifth lens becomes too strong, and it becomes difficult to correct field curvature occurring from a center to an intermediate image height (for example a height increased by 20 to 50 percent) in a well-balanced manner.

The conditional expression (9) defines the Abbe number of the fifth lens at the d-line. When the Abbe number falls below the specified value, it becomes difficult to correct axial chromatic aberration and chromatic aberration of magnification in a well-balanced manner, and excellent optical performance cannot be maintained.

Thus, in the imaging lens of the imaging device, by satisfying the conditional expression (8) and the conditional expression (9), it is possible to reduce the total optical length while correcting axial chromatic aberration and chromatic aberration of magnification in a well-balanced manner and ensuring excellent optical performance corresponding with a high pixel imaging element.

Thus, the imaging lens of the imaging device according to the present invention has excellent optical performance, with spherical aberration of axial aberrations, comatic aberration of off-axis aberrations, and field curvature corrected in a well-balanced manner, for a high pixel imaging element having eight million pixels or more, for example, even when the aperture is enlarged to an F-number of about 2.0.

In addition, in the present invention, the imaging device including a small-size and large-aperture imaging lens having high resolution performance with axial chromatic aberration corrected in a well-balanced manner while the total optical length is reduced can be formed for a high pixel imaging element having eight million pixels or more, for example.

Further, because all of the lenses of the imaging lens in the imaging device are formed by inexpensive lenses made of resin, variation in field curvature, which becomes a problem at a time of a variation in temperature, can be suppressed while mass productivity is ensured.


(3-2. Configuration of Portable Telephone Including Imaging Device)

Description will next be made of a portable telephone including the imaging device according to the present invention.

As shown in FIG. 11 and FIG. 12, the portable telephone 100 has a display section 101 and a main body section 102 foldably coupled to each other via a hinge part 103. The display section 101 and the main body section 102 are in a folded state when the portable telephone 100 is carried (FIG. 11). The display section 101 and the main body section 102 are in an unfolded state when the portable telephone 100 is used during a call (FIG. 12).

The display section 101 has a liquid crystal display panel 111 disposed in one surface of the display section 101, and has a speaker 112 disposed above the liquid crystal display panel 111. In addition, an imaging device 107 is incorporated within the display section 101, and an infrared communicating section 104 for performing infrared wireless communication is disposed at an end of the display section 101.

In addition, a cover lens 105 located on the object side of the first lens in the imaging device 107 is disposed in another surface of the display section 101.

The main body section 102 has various kinds of operating keys 113 such as numeric keys, a power key, and the like disposed in one surface of the main body section 102, and has a microphone 114 disposed at a lower end of the main body section 102. The main body section 102 also has a memory card slot 106 disposed in a side of the main body section 102. A memory card 120 can be inserted into and removed from the memory card slot 106.

As shown in FIG. 13, the portable telephone 100 has a CPU (Central Processing Unit) 130. The portable telephone 100 expands a control program stored in a ROM (Read Only Memory) 131 into a RAM (Random Access Memory) 132. The portable telephone 100 performs centralized control of the portable telephone 100 as a whole via a bus 133.

The portable telephone 100 has a camera control section 140. The portable telephone 100 can photograph a still image or a moving image by controlling the imaging device 107 via the camera control section 140.

The camera control section 140 subjects image data obtained by photographing via the imaging device 107 to compression processing by JPEG (Joint Photographic Experts Group), MPEG (Moving Picture Expert Group), or the like, and sends out the resulting image data to the CPU 130, a display control section 134, a communication control section 160, a memory card interface 170, or an infrared interface 135 via the bus 133.

The imaging device 107 is formed by combining one of the imaging lenses 1, 10, 20, 30, and 40 with an imaging element SS formed by a CCD sensor, a CMOS sensor, or the like.

The CPU 130 in the portable telephone 100 temporarily stores the image data supplied from the camera control section 140 in the RAM 132, stores the image data in the memory card 120 via the memory card interface 170 as required, or outputs the image data to the liquid crystal display panel 111 via the display control section 134.

In addition, the portable telephone 100 can temporarily store audio data recorded via the microphone 114 at the same time as the photographing in the RAM 132 via an audio codec 150, store the audio data in the memory card 120 via the memory card interface 170 as required, or perform audio output of the audio data from the speaker 112 via the audio codec 150 simultaneously with image display on the liquid crystal display panel 111.

Incidentally, the portable telephone 100 can output the image data and the audio data to the outside via the infrared interface 135 and the infrared communicating section 104 to transmit the image data and the audio data to another electronic device having an infrared communicating function such for example as a portable telephone, a personal computer, or a PDA (Personal Digital Assistant).

Incidentally, in the portable telephone 100, when the moving image or the still image is to be displayed on the liquid crystal display panel 111 on the basis of the image data stored in the RAM 132 or the memory card 120, the image data is decoded and decompressed by the camera control section 140, and thereafter output to the liquid crystal display panel 111 via the display control section 134.

The communication control section 160 transmits and receives radio waves to and from a base station via an antenna not shown in the figures. The communication control section 160 in a voice call mode subjects received audio data to predetermined processing, and thereafter outputs the audio data to the speaker 112 via the audio codec 150.

In addition, the communication control section 160 subjects an audio signal obtained by collecting sound by the microphone 114 to predetermined processing via the audio codec 150, and thereafter transmits the audio signal via the antenna not shown in the figures.

The imaging lens 1, 10, 20, 30, or 40 incorporated within the imaging device 107 can be miniaturized and have a large aperture while the total optical length is reduced, as described above. The imaging device 107 is therefore advantageous when incorporated in an electronic device desired to be reduced in size, such as a portable telephone or the like.

<4. Other Embodiments>

Incidentally, in the foregoing embodiment, the concrete shapes, structures, and numerical values of the respective parts in the imaging lenses 1, 10, 20, 30, and 40 as the first to fifth numerical examples each represent a mere example of embodiment performed in carrying out the present invention. The technical scope of the present invention should not be construed as limited by these concrete shapes, structures, and numerical values.

In addition, in the foregoing embodiment, description has been made of a case where concrete numerical values in Table 16 are shown on the basis of the first to fifth numerical examples. However, the present invention is not limited to this. Various other concrete shapes, structures, and numerical values may be used within such ranges as to satisfy the conditional expressions (1) to (9).

Further, in the foregoing embodiment, description has been made of a case where the imaging lens uses the first lens including convex surfaces facing the object side and the image side and having positive refractive power. However, the present invention is not limited to this. The imaging lens may use for example a first lens in a meniscus shape including a concave surface facing the image side and having positive refractive power as long as only the conditional expression (1) and the conditional expression (6) are satisfied.

Further, in the foregoing embodiment, description has been made of a case where the imaging lens uses the third lens including convex surfaces facing the object side and the image side and having positive refractive power. However, the present invention is not limited to this. The imaging lens may use for example a third lens in a meniscus shape including a concave surface facing the object side and having positive refractive power as long as only the conditional expression (3) and the conditional expression (5) are satisfied.

Further, in the foregoing embodiment, description has been made of a case where the imaging lens has the power arrangement described above, satisfies the conditional expressions (1) to (4), the conditional expression (5), the conditional expression (6), the conditional expression (8), and the conditional expression (9), and has the aperture stop STO disposed nearer to the object side than the object side surface of the second lens.

The present invention is not limited to this. The imaging lens may have the power arrangement described above, satisfy only the conditional expressions (1) to (4), the conditional expression (5), and the conditional expression (6), and have the aperture stop STO disposed nearer to the object side than the object side surface of the second lens.

In addition, the imaging lens may have the power arrangement described above, satisfy only the conditional expressions (1) to (4), the conditional expression (5), the conditional expression (8), and the conditional expression (9), and have the aperture stop STO disposed nearer to the object side than the object side surface of the second lens, or may have the power arrangement described above, satisfy only the conditional expressions (1) to (4) and the conditional expression (5), and have the aperture stop STO disposed nearer to the object side than the object side surface of the second lens.

Further, the imaging lens may have the power arrangement described above, satisfy only the conditional expressions (1) to (4), the conditional expression (6), the conditional expression (8), and the conditional expression (9), and have the aperture stop STO disposed nearer to the object side than the object side surface of the second lens, or may have the power arrangement described above, satisfy only the conditional expressions (1) to (4) and the conditional expression (6), and have the aperture stop STO disposed nearer to the object side than the object side surface of the second lens.

Further, the imaging lens may have the power arrangement described above, satisfy only the conditional expressions (1) to (4), the conditional expression (8), and the conditional expression (9), and have the aperture stop STO disposed nearer to the object side than the object side surface of the second lens, or may have the power arrangement described above, satisfy only the conditional expressions (1) to (4), and have the aperture stop STO disposed nearer to the object side than the object side surface of the second lens.

Further, the imaging lens may have the power arrangement described above, satisfy only the conditional expression (5), the conditional expression (6), the conditional expression (8), and the conditional expression (9), and have the aperture stop STO disposed nearer to the object side than the object side surface of the second lens, or may have the power arrangement described above, satisfy only the conditional expression (5) and the conditional expression (6), and have the aperture stop STO disposed nearer to the object side than the object side surface of the second lens.

Further, the imaging lens may have the power arrangement described above, satisfy only the conditional expression (5), the conditional expression (8), and the conditional expression (9), and have the aperture stop STO disposed nearer to the object side than the object side surface of the second lens, or may have the power arrangement described above, satisfy only the conditional expression (5), and have the aperture stop STO disposed nearer to the object side than the object side surface of the second lens.

Further, the imaging lens may have the power arrangement described above, satisfy only the conditional expression (6), the conditional expression (8), and the conditional expression (9), and have the aperture stop STO disposed nearer to the object side than the object side surface of the second lens, or may have the power arrangement described above, satisfy only the conditional expression (6), and have the aperture stop STO disposed nearer to the object side than the object side surface of the second lens.

Further, the imaging lens may have the power arrangement described above, satisfy only the conditional expression (8) and the conditional expression (9), and have the aperture stop STO disposed nearer to the object side than the object side surface of the second lens, or may have the power arrangement described above, and have the aperture stop STO disposed nearer to the object side than the object side surface of the second lens.

[Industrial Applicability]

In the imaging lens and the imaging device according to the present invention, a case where the imaging device 107 is incorporated in the portable telephone 100, for example, has been illustrated as an example. However, applications of the imaging device are not limited to this. The imaging device is widely applicable to various other electronic devices such as digital video cameras, digital still cameras, personal computers including a camera, PDAs including a camera, and the like.

[Reference Signs List]

1, 10, 20, 30, 40...Imaging lens, 100...Portable telephone, 101...Display section, 102...Main body section, 103...Hinge part, 104...Infrared communicating section, 105...Cover lens, 106...Memory card slot, 107...Imaging device, 111...Liquid crystal display panel, 112...Speaker, 113...Operating key, 114...Microphone, 120...Memory card, 130...CPU, 131...ROM, 132...RAM, 134...Display control section, 135...Infrared interface, 140...Camera control section, 150...Audio codec, 160...Communication control section, 170...Memory card interface

**Claims**

1. An imaging lens comprising, in order from an object side:

   a first lens having positive refractive power;
   a second lens in a meniscus shape including a concave surface facing an image side and having negative refractive power;
   a third lens having positive refractive power;
   a fourth lens in a meniscus shape including a concave surface facing the object side and having positive refractive power in a vicinity of an optical axis; and
   a fifth lens having negative refractive power in the vicinity of the optical axis and having positive refractive power in a peripheral section.

2. The imaging lens according to claim 1,
   wherein all of the first to fifth lenses are formed by lenses made of resin, and formed so as to satisfy a conditional expression (1), a conditional expression (2), a conditional expression (3), and a conditional expression (4) in the following:

$$(1) \quad \nu_1 > 50$$

$$(2) \quad \nu_2 < 30$$

$$(3) \quad \nu_3 > 50$$

$$(4) \quad \nu_5 > 50$$

where

$\nu_1$ is an Abbe number of the first lens at a d-line (wavelength of 587.6 nm),
$\nu_2$ is an Abbe number of the second lens at the d-line (wavelength of 587.6 nm),
$\nu_3$ is an Abbe number of the third lens at the d-line (wavelength of 587.6 nm), and
$\nu_4$ is an Abbe number of the fourth lens at the d-line (wavelength of 587.6 nm).

**3.** The imaging lens according to claim 1 or claim 2,
wherein a conditional expression (5) in the following is satisfied:

$$(5) \quad 0 < f_3/f_4 < 3.0$$

where

$f_3$ is a focal length of the third lens, and
$f_4$ is a focal length of the fourth lens.

**4.** The imaging lens according to any one of claims 1 to 3, wherein a conditional expression (6) in the following is satisfied:

$$(6) \quad 0.5 < |f_1/f_2| < 1.3$$

where

$f_1$ is a focal length of the first lens, and
$f_2$ is a focal length of the second lens.

**5.** The imaging lens according to any one of claims 1 to 4,
wherein a conditional expression (8) and a conditional expression (9) in the following are satisfied:

$$(8) \quad 0.5 < |f_5/f| < 3.0$$

$$(9) \quad \nu_5 > 50$$

where

$f$ is a focal length of an entire lens system,

$f_5$ is a focal length of the fifth lens, and

$v_5$ is an Abbe number of the fifth lens at a d-line (wavelength of 587.6 nm).

6. The imaging lens according to any one of claims 1 to 5, wherein an aperture stop for adjusting an amount of light is disposed nearer to the object side than an object side surface of the second lens.

7. An imaging device comprising:

an imaging lens; and
an imaging element for converting an optical image formed by the imaging lens into an electric signal;
wherein the imaging lens includes, in order from an object side,

a first lens having positive refractive power,
a second lens in a meniscus shape including a concave surface facing an image side and having negative refractive power,
a third lens having positive refractive power,
a fourth lens in a meniscus shape including a concave surface facing the object side and having positive refractive power in a vicinity of an optical axis, and
a fifth lens having negative refractive power in the vicinity of the optical axis and having positive refractive power in a peripheral section.

FIG.1

EP 2 579 080 A1

# FIG.2

SPHERICAL ABERRATION

1.00
0.75
0.50
0.25

---- c-LINE(656.2700NM)
—— d-LINE(587.5600NM)
— - g-LINE(435.8400NM)

-0.050 -0.025 0.0 0.025 0.050
FOCUS (MILLIMETERS)

ASTIGMATISM

IMG HT

Y  X    2.86
ΔS      ΔM
        2.14

---- c-LINE(656.2700NM)
—— d-LINE(587.5600NM)
— - g-LINE(435.8400NM)

1.43
0.71

-0.100 -0.050 0.0 0.050 0.100
FOCUS (MILLIMETERS)

DISTORTION ABERRATION

IMG HT

2.86
2.14

---- c-LINE(656.2700NM)
—— d-LINE(587.5600NM)
— - g-LINE(435.8400NM)

1.43
0.71

-5.0 -2.5 0.0 2.5 5.0
% DISTORTION

EP 2 579 080 A1

FIG. 3

# FIG.4

SPHERICAL ABERRATION

c-LINE(656.2700NM)
d-LINE(587.5600NM)
g-LINE(435.8400NM)

1.00
0.75
0.50
0.25

-0.050 -0.025 0.0 0.025 0.050
FOCUS (MILLIMETERS)

ASTIGMATISM

IMG HT

X Y

ΔS          ΔM

c-LINE(656.2700NM)
d-LINE(587.5600NM)
g-LINE(435.8400NM)

2.86
2.14
1.43
0.71

-0.100 -0.050 0.0 0.050 0.100
FOCUS (MILLIMETERS)

DISTORTION ABERRATION

IMG HT

c-LINE(656.2700NM)
d-LINE(587.5600NM)
g-LINE(435.8400NM)

2.86
2.14
1.43
0.71

-5.0 -2.5 0.0 2.5 5.0
% DISTORTION

EP 2 579 080 A1

# FIG.5

# FIG.6

SPHERICAL ABERRATION

ASTIGMATISM

DISTORTION ABERRATION

c-LINE(656.2700NM)
d-LINE(587.5600NM)
g-LINE(435.8400NM)

FOCUS (MILLIMETERS)

FOCUS (MILLIMETERS)

% DISTORTION

EP 2 579 080 A1

FIG.7

30

EP 2 579 080 A1

# FIG.8

SPHERICAL ABERRATION

ASTIGMATISM
IMG HT

DISTORTION ABERRATION
IMG HT

c-LINE(656.2700NM)
d-LINE(587.5600NM)
g-LINE(435.8400NM)

FOCUS (MILLIMETERS)

FOCUS (MILLIMETERS)

% DISTORTION

FIG.9

# FIG.10

SPHERICAL ABERRATION

c-LINE(656.2700NM)
d-LINE(587.5600NM)
g-LINE(435.8400NM)

1.00

0.75

0.50

0.25

-0.050 -0.025  0.0  0.025  0.050
FOCUS (MILLIMETERS)

ASTIGMATISM

IMG HT

Y   X  2.86

ΔS        ΔM

2.14

c-LINE(656.2700NM)
d-LINE(587.5600NM)
g-LINE(435.8400NM)

1.43

0.71

-0.100 -0.050  0.0  0.050  0.100
FOCUS (MILLIMETERS)

DISTORTION ABERRATION

IMG HT

2.86

2.14

c-LINE(656.2700NM)
d-LINE(587.5600NM)
g-LINE(435.8400NM)

1.43

0.71

-5.0  -2.5  0.0  2.5  5.0
% DISTORTION

# FIG.11

100

103 HINGE PART

101 DISPLAY SECTION

106

105 COVER LENS
107 IMAGING DEVICE

102 MAIN BODY SECTION

104 INFRARED COMMUNICATING SECTION

# FIG.12

112 SPEAKER

100

111 LIQUID CRYSTAL
DISPLAY PANEL

101 DISPLAY SECTION

103 HINGE PART

113 OPERATING KEY

120 MEMORY CARD

106 MEMORY CARD SLOT

102 MAIN BODY SECTION

114 MICROPHONE

# FIG.13

100

130 CPU

133

131 ROM

132 RAM

160 COMMUNICATION CONTROL SECTION

111 LIQUID CRYSTAL DISPLAY PANEL

134 DISPLAY CONTROL SECTION

107 IMAGING DEVICE

140 CAMERA CONTROL SECTION

SS(IMG)

1(10,20,30,40) IMAGING LENS

112 SPEAKER

150 AUDIO CODEC

114 MICROPHONE

170 MEMORY CARD INTERFACE

120 MEMORY CARD

113 OPERATING KEY

135 INFRARED INTERFACE

104 INFRARED COMMUNICATING SECTION

**INTERNATIONAL SEARCH REPORT**

International application No.

PCT/JP2011/062748

A.   CLASSIFICATION OF SUBJECT MATTER
*G02B13/00*(2006.01)i, *G02B13/18*(2006.01)i

According to International Patent Classification (IPC) or to both national classification and IPC

B.   FIELDS SEARCHED

Minimum documentation searched (classification system followed by classification symbols)
G02B13/00, G02B13/18

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X | JP 2010-79296 A  (Konica Minolta Opto, Inc.), 08 April 2010 (08.04.2010), claim 1; examples 6, 7 & US 2010/0053776 A1 | 1-7 |
| P,X | JP 2010-197665 A  (Olympus Corp.), 09 September 2010 (09.09.2010), claims 1, 9, 10; numerical examples 2 to 7 & US 2010/0214467 A1 | 1-7 |
| P,X | JP 2010-224521 A  (Konica Minolta Opto, Inc.), 07 October 2010 (07.10.2010), claims 1, 14; examples 2 to 5, 7 to 9, 11 & US 2010/0220229 A1    & CN 101819315 A | 1-7 |

☒   Further documents are listed in the continuation of Box C.        ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29 June, 2011 (29.06.11) | 12 July, 2011 (12.07.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2011/062748 |

C (Continuation).  DOCUMENTS CONSIDERED TO BE RELEVANT

| Category* | Citation of document, with indication, where appropriate, of the relevant passages | Relevant to claim No. |
| --- | --- | --- |
| P,X | JP 2010-262269 A  (Fujifilm Corp.),<br>18 November 2010 (18.11.2010),<br>claim 8; example 6<br>& US 2010/0254029 A1    & CN 201508432 U | 1-7 |
| P,X | JP 2011-95513 A  (Optical Logic Inc.),<br>12 May 2011 (12.05.2011),<br>numerical examples 1 to 4<br>(Family: none) | 1-7 |

Form PCT/ISA/210 (continuation of second sheet) (July 2009)

**EP 2 579 080 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009265245 A
- JP 2010049113 A